# EUROPÄISCHE PATENTSCHRIFT

(11) **EP 1 560 723 B1**
(45) Veröffentlichungstag und Bekanntmachung des Hinweises auf die Patenterteilung: **04.06.2008**
(21) Anmeldenummer: 03767511.3
(22) Anmeldetag: 29.10.2003
(51) Int. Cl.: B60H 1/00

(54) **VORRICHTUNG UND VERFAHREN ZUR LUFTVERTEILUNG IN EINEM FAHRZEUG**
DEVICE AND METHOD FOR AIR DISTRIBUTION IN A VEHICLE
DISPOSITIF ET PROCEDE DE REPARTITION D'AIR DANS UN VEHICULE

(30) Priorität: 05.11.2002 DE 10251760
(43) Veröffentlichungstag der Anmeldung: 10.08.2005
(73) Patentinhaber: Behr GmbH & Co. KG, 70469 Stuttgart (DE)
(72) Erfinder: EBNER, Günter, 70825 Korntal-Münchingen (DE); WOLF, Walter, 71570 Oppenweiler-Zell (DE)
(74) Vertreter: Grauel, Andreas
(86) Internationale Anmeldenummer: PCT/EP2003/011986
(87) Internationale Veröffentlichungsnummer: WO 2004/041566

(56) Entgegenhaltungen:
- DE-A- 2 813 909
- FR-A- 2 725 404
- FR-A- 2 771 054
- GB-A- 2 302 404
- US-A- 4 120 347
- US-A- 5 399 121

## Beschreibung

Die Erfindung betrifft eine Vorrichtung zur Luftverteilung im Innenraum eines Fahrzeugs mit mehreren Strömungsauslässen (kurz Auslässe oder Ausströmer genannt), die einen oder mehrere an eine Heizungs- oder Klimaanlage angeschlossene Strömungskanäle, insbesondere Luftkanäle mit dem Innenraum verbinden. Des Weiteren betrifft die Erfindung einen zur Luftverteilung besonders geeigneten Strömungskanal.

Üblicherweise werden Fahrzeuge, z.B. Land-, Wasser- oder Luftfahrzeuge, insbesondere deren Innenraum beheizt oder klimatisiert. Hierzu sind im Allgemeinen an mehreren, als geeignet erachtete Stellen Strömungsauslässe oder Ausströmpunkte vorgesehen, die über separate Strömungskanäle mit einer Heizungs- oder Klimaanlage verbunden sind. Hierdurch ist ein großer Bauraum erforderlich. Bedingt durch eine in der Fahrzeugaußenhaut verlaufenden Anordnung der Strömungskanäle ist der verfügbare Bauraum sehr begrenzt. Eine Verkleinerung des Kanalquerschnitts bedingt eine Erhöhung der Strömungsgeschwindigkeit eines durch den Strömungskanal fließenden Fluids, welches wiederum zu einer Geräuscherhöhung und somit zu einer erheblichen Beeinträchtigung des Komforts führt.

Darüber hinaus weist eine derartig stark verzweigte Luftverteilungsvorrichtung ein hohes Gewicht auf, da die Strömungs- oder Luftverteilungskanäle üblicherweise aus gespritzten harten formstabilen Schalen oder Blasformteilen gebildet sind. Die Herstellung derartig starrer Strömungskanäle ist aufgrund komplexer Geometrien besonders aufwendig und kostenintensiv. Aus der DE 200 21 556 U1 ist beispielsweise ein aus einem flexiblem Material gebildeter luftdichter Schlauch als Fluid- oder Strömungskanal bekannt, welcher eine Beschichtung gegen Verklebung bedarf. Außerdem kann ein derartiger Schlauch nur mittels Kleben oder Schweißen verbunden werden, welches aufgrund des geringen Bauraumes sehr aufwendig hinsichtlich einer-genauen Positionierung ist. Das Dokument US. 5,399,121 zeigt einen Strömungskanal zur Luftverteilung in einem Fahrzeug gemäß dem Oberbegriff des Anspruchs 1.

Der Erfindung liegt daher die Aufgabe zugrunde, eine Vorrichtung zur Luftverteilung im Innenraum eines Fahrzeugs anzugeben, welche besonders einfach und platzsparend sowie kostengünstig und mit einem gegenüber dem Stand der Technik geringeren Gewicht ausgebildet ist. Des Weiteren ist ein besonders geeigneter Strömungskanal zur Luftverteilung im Innenraum des Fahrzeugs anzugeben.

Die erstgenannte Aufgabe wird erfindungsgemäß gelöst durch eine Vorrichtung zur Luftverteilung im Innenraum eines Fahrzeugs mit einem Belüftungselement zur Erzeugung eines Luftstroms und mit mindestens einem an dem Belüftungselement angeschlossenen Strömungskanal sowie mit mehreren in den Innenraum führenden Auslässe, wobei der Strömungskanal als ein gemeinsamer Mehrkammerkanal für mehrere Auslässe ausgebildet ist und mehrere Austrittsöffnungen aufweist, die unmittelbar in die Auslässe münden.

Die Erfindung geht dabei von der Überlegung aus, dass eine Vorrichtung zur Luftverteilung im Innenraum eines Fahrzeugs derart vereinfacht werden soll, dass eine direkte Luftzuführung zu allen Auslässen unter Vermeidung eines komplexen verzweigten Kanalsystems vorgesehen ist. Dabei kann direkt vom jeweiligen Auslass auf ein allen Auslässen gemeinsames Luftvolumen zugegriffen werden. Dabei sollte neben der Vereinfachung der Kanalführung auch das Gewicht deutlich reduziert werden und eine derartige strömungsgünstige Kanalführung ermöglicht sein, dass eine Wirbelbildung des den Strömungskanal durchströmenden Fluids und sogenannte Totwasserzonen sicher vermieden sind. Hierzu wird ein einziger gemeinsamer Strömungskanal für mehrere Auslässe oder Ausblas-Stellen gebildet, der über an geeignete Stelle angeordnete Öffnungen verfügt, über die das Fluid an den Auslässen ggf. gemischt und temperiert wird. Dazu ist der Strömungskanal als Mehrkammerkanal ausgebildet. Hierdurch ist die Anzahl von Abgängen aus einer Heizungs- oder Klimaanlage deutlich reduziert. Eine derartige einen einzigen Strömungskanal mit mehreren variablen eingefügten Austrittsöffnungen ermöglicht eine besonders einfache und standardisierbare Luftverteilungsvorrichtung, welche einen besonders kleinen Bauraum benötigt. Bedingt durch den einfachen Aufbau und der besonders variablen Einstellung der Austrittsöffnungen kann die Luftverteilungsvorrichtung individuell auf Wunsch eingestellt und ausgebildet werden, wodurch ein besonders hoher thermischer Komfort ermöglicht ist.

Zur Temperierung einzelner Auslässe nach individuellen Wünschen ist zweckmäßigerweise der Mehrkammerkanal als ein Zweikammerkanal ausgebildet ist. Beispielsweise umfasst der Mehrkammerkanal mindestens zwei Kammerkanäle oder Teilkanäle, insbesondere zwei sogenannte Einkammerkanäle oder aber auch mehrere Einkammerkanäle. Bevorzugt ist der eine Kammerkanal als Kaltstromkanal und der andere als Warmstromkanal ausgebildet. Mit anderen Worten: In einer Kammer des Mehrkammerkanals wird ein warmes Fluid und in der anderen Kammer (= Teilkanal oder Einkammerkanal) ein kaltes Fluid geführt. Je nach Ausführung der Luftverteilungsvorrichtung ist dem Mehrkammerkanal ein Kälteerzeuger, z.B. ein Verdampfer, ein Wärmeerzeuger, z.B. ein Heizelement, und/oder ein Trockner, z.B. ein Reheater, zugeordnet.

Alternativ kann der Mehrkammerkanal in mehrere Kammerkanäle unterteilt sein. Dabei kann ein im Kanalquerschnitt großer Mehrkammerkanal aus mehreren einzelnen Kammerkanälen oder aus einem großen Kanal mit durch Einfügung von Wänden getrennten Kammern gebildet sein. Zusätzlich kann der Mehrkammerkanal abschnittsweise an besonders geeigneten Stellen, z.B. im Bereich einer schnell vom Eis oder Frost zu befreienden Scheibe, in mehrere Kammerkanäle unterteilt sein, wobei die Anzahl von ein warmes Fluid führenden Kammern oder Kammerkanäle größer ist als die Anzahl von ein kaltes Fluid führenden Kammern bzw. Kammerkanälen. Bevorzugt ist dabei ein einzelner Kammerkanal als Zweikammerkanal oder als ein einzelner Mischkammerkanal ausgebildet. Beim Mischkammerkanal ist bereits das kalte und das warme Fluid gemischt, so dass eine individuelle Temperierung an den betreffenden Austrittsöffnungen des Mischkammerkanals ermöglicht ist. Hierzu mündet zweckmäßigerweise jeder Kammerkanal an dessen Austrittsöffnungen in einen zugehörigen Auslass. Die jeweilige Austrittsöffnung umfasst des Weiteren mindestens ein Stellelement oder ein Mischelement. Beispielsweise ist ein sogenannte Defrostaustritt zur zugfreien Belüftung nutzbar, an welchen mittels eines Stellelements oder Mischelements trockene Luft gegen ein Beschlagen einstellbar ist.

Zur individuellen Einstellung des Luftstroms am jeweiligen Auslass und/oder zur Temperierung des einstellbaren Luftstroms durch Mischung von Kalt- und Warmluftstrom ist der Strömungskanal mit mindestens einem Stell- oder Leitelement, z.B. einem Sperrelement versehen. Beispielsweise ist als Sperrelement eine Klappe, eine Zwischenwand, eine Weiche oder ein anderes Leitteil vorgesehen. Für eine automatische Einstellung des Luftstroms und Temperierung des Fahrzeuginnenraumes ist vorteilhafterweise an mindestens einem Auslass ein Messsensor zur Erfassung von betriebsrelevanten Daten vorgesehen. Anhand von erfassten Betriebsdaten, z.B. Innenraumtemperatur und/oder Klappenposition am betreffenden Auslass ist eine automatische Anpassung der Luftstrommenge durch entsprechende Steuerung des Lüfters und/oder der Klappenposition insbesondere in Abhängigkeit von bereits eingestellten Solltemperaturen und Strömungsstärken und/oder von individuellen insassenbezogenen Vorgaben an einzelnen Luftauslässen oder ggf. von Einstellungen an einer Klimaanlage ermöglicht.

Für einen besonders platzsparenden und einfachen Ein- und Ausbau der Luftverteilungsvorrichtung ist der als Mehrkammerkanal ausgebildete einzelne Strömungskanal entlang einer Fahrzeughaut längsseitig und/oder querseitig verlaufend angeordnet. In einer bevorzugten Ausführungsform ist dabei der Mehrkammerkanal als Ringleitung ausgebildet. Vorteilhafterweise kann dabei der Mehrkammerkanal auch in einer Schicht, z.B. im Frontbereich im Bereich einer sogenannten Stirnwand oder direkt unterhalb einer Instrumententafel oder oberhalb einer durch eine Lenksäule und eine Fahrzeugquerachse (sogenannte Y-Achse) gebildeten Ebene verlaufen. Mit anderen Worten: Der Mehrkammerkanal wird als eine sandwichartige Schicht ausgebildet, wobei die einzelnen Kammerkanäle innerhalb des Sandwiches verlaufen und die Sandwichstruktur des Mehrkammerkanals selbst eine tragende Funktion, z.B. zur Quer- und/oder Längsaussteifung des Fahrzeugs oder eine andere Funktion, z.B. Haltefunktion zur Befestigung von Funktionselementen, z.B. von Lenkung und Airbag, übernimmt.

Die den Strömungskanal betreffende Aufgabe wird erfindungsgemäß gelöst durch eine Kanalwand aus zumindest teilweise verformbarem Material, welches unter Bildung eines schlauchartigen Hohlraumes geformt und lösbar und/oder unlösbar befestigt ist. Das Material der Kanalwand ist an eine formfesten Fläche unter Bildung eines Hohlraumes befestigt. Beispielsweise ist die Kanalwand zu einem Teil aus einer formstabilen Wand einer Außen- oder Innenhaut des Fahrzeugs gebildet und zum anderen Teil aus dem verformbaren Material, welches unter Bildung des Hohlraumes an die formstabile Wand gefügt wird. Zwischen dem formbaren Material und der formstabilen Wand wird in durch den oder mehrere Hohlräume gebildeten einzelnen bzw. mehreren Strömungskanälen ein Fluid, insbesondere Luft geführt. Der Strömungskanal weist Bereiche mit Öffnungen auf, durch welche das Fluid austreten kann. Hierdurch können die bei herkömmlichen Strömungskanälen erforderlichen zusätzlichen Düsen ggf. entfallen.

Im Querschnitt weist dabei der Strömungskanal je nach Anzahl der Befestigungspunkte eine U- oder Omega-Form auf. Für einen besonders leichten Ein- und Ausbau des Strömungskanals ist die Kanalwand lösbar befestigt, z.B. geclipt oder geklemmt. Dazu weist beispielsweise die Innen- oder Außenhaut des Fahrzeugs entsprechende Nuten, Vertiefungen, Erhöhungen, Rippen oder Noppen auf. Alternativ zur geteilten Ausbildung des Strömungskanals kann dessen Kanalwand durch das Material selbst schlauchartig geformt sein. Zur Befestigung weist der schlauchförmige Strömungskanal eine Lippe auf, welche in eine Nut, eine Verrippung oder eine Vertiefung der formstabilen Wand gefügt wird.

Für eine besonders flexible und dünnwandige Ausbildung des Strömungskanals ist das verformbare Material folienartig ausgebildet. Alternativ oder zusätzlich ist das verformbare Material gewebeartig ausgebildet. Je nach gewünschter Form oder Kontur sowie in Abhängigkeit vom jeweiligen Material wird bei einer Folie diese beispielsweise u-förmig gefaltet und ggf. mit einem Gewebe verstärkt. Ein derartiges Verstärkungsgewebe kann z.B. dreidimensional ausgebildet sein, um eine besondere Konturgebung zu ermöglichen. Beispielsweise kann der Strömungskanal bereichs- oder abschnittsweise durch ein Verstärkungsgewebe abgedrückt sein, wodurch sich eine einfache Drossel- und/oder Absperrfunktion ergibt. Alternativ oder zusätzlich kann, das verformbare Material mit einem Profil versehen sein. Dabei werden beispielsweise Drähte oder Profile in den Hohlraum des Strömungskanals integriert. Diese können z.B. zur Bildung von Folienlängskanten, aber auch zur Fixierung auf einem festen Träger oder einer formstabilen Karosseriefläche, z.B. auf einer Instrumententafel, einer Mittelkonsole bzw. auf einer Tür-, Dach- oder Seitenwandverkleidung vorgesehen sein. Alternativ können Lochungen der Folien oder des Gewebes zum Fixieren oder Positionieren verwendet werden.

In Abhängigkeit von der Funktion und vorgegebenen Einbauparametern ist der Strömungskanal bevorzugt mit einer mehrschichtigen oder mehrlagigen Kanalwand ausgeführt. Bei einer bevorzugten Ausführungsform kann beispielsweise eine Schaumfolie als Isolationsschicht und somit Kanalwand mit einem Netz aus Polypropylen oder Polyethylen versehen sein. Je nach Schichtung kann die Kanalwand aus einer Folien-Netz-Folien-Schichtung, z.B. PMMA-Hi-PMMA-ASA-Schichtung (mit PMMA=Polymethylmethacrylat, ASA=Acrylester-Styrol-Acrylnitril-Terpolymer), ausgeführt sein. Des Weiteren kann die Kanalwand auch aus einer Mehrschichtfolie, sogenannte PMMA, ASA-, ABS-, PC/ASA-, PC/PBT-Folien (mit PMMA=Polymethylmethacrylat, ASA=Acrylester-Styrol-Acrylnitril-Terpolymer, ABS=Acrylnitril-Butadien-Styrol-Terpolymer, PC=Polycarbonat, PBT=Polybutylenterphtalat) gebildet sein. Alternativ kann die Kanalwand aus einer mit einem Gewebe aus Kunststofffasern oder Metallfasern versehenen, kompakten Folien ausgeführt sein. Beispiele hierfür sind Folien aus Polyvinylchlorid, Polypropylen, Polyethylen, Thermoplastisches Polyolefin, Thermoplastische Polyurethane, Teflon, EPDM-, Ethen Thermoplast-, Esther Thermoplast-, PMMA/ASA-Folien. Auch Elastomere oder Thermoplaste, wie z.B. SBR (=Styrol-Butadin-Kautschuk), EPM/EPDM (Ethylen-Propylen-Kautschuk), FPM, NBR (=Nitrilkautschuk, Acrylnitril-Butadien-Kautschuk) bzw. PE, PP, Polystyrol-Kunststoffe sind als Material für die Kanalwand geeignet. Durch die Verwendung derartiger Materialien für die Kanalwand sind akustische und/oder thermische Eigenschaften, wie z.B. akustisch und/oder thermisch isoliert, beliebig beispielsweise abschnittsweise durch einen entsprechend ausgeführten Schichtenaufbau der Kanalwand einstellbar. Bevorzugt weist der Strömungskanal eine Kanalwand mit einer Reißfestigkeit von mindestens 1 bar Überdruck (maximal 2 bar für den Absolutgebläsedruck gegen geschlossene Klappen) und einer Temperaturbeständigkeit von 85°C bis mindestens 120°C auf. Hierdurch ist sichergestellt, dass sowohl bei Überdruck, z.B. bei geschlossenen Auslassdüsen und eingeschaltetem Lüfter als auch bei besonders hohen thermischen Belastungen, z.B. durch Sonneneinstrahlung der Strömungskanal formstabil und funktionsstabil bleibt. Des Weiteren soll infolge von Feuchtigkeit ein Zusammenkleben der Innenseite der Kanalwand verhindert werden. Dazu weist die Kanalwand bevorzugt eine wandstabile Struktur auf. Beispielsweise ist die Haut oder das verformbare Material entsprechend flexibel, insbesondere elastisch ausgeführt, so dass eine Faltenbildung und somit ein Verkleben sicher vermieden ist. Gleichzeitig wird durch Verwendung eines elastischen, insbesondere gummiartigen Materials mit besonders guten akustischen Dämpfungseigenschaften eine Geräuschbildung unterdrückt und demzufolge der Fahrkomfort erhöht. In einer bevorzugten Ausführungsform ist zwischen zwei Kammern des Mehrkammerkanals eine elastische, formbare und/oder faltbare Trennwand angeordnet. Durch eine derartig flexibel formbare Trennwand sind für die beiden Kammern variable Querschnitte einstellbar.

Ein Verfahren zur Luftverteilung im Innenraum eines Fahrzeugs verläuft so, dass mittels eines Belüftungselements ein Gesamtluftstrom erzeugt und einem an dem Belüftungselement angeschlossenen Strömungskanal zugeführt wird, wobei über mehrere in den Innenraum mündende Auslässe dem Gesamtluftstrom jeweils ein zugehöriger Teilluftstrom entnommen wird. Mit anderen Worten: Ein einzelner Strömungskanal wird gleichzeitig für mehrere Auslässe oder Ausblasstellen genutzt, wobei an den verschiedenen Auslässen aus dem gemeinsamen Gesamtluftstrom der zugehörige Teilluftstrom abgezweigt und in den Innenraum geführt wird. In einer bevorzugten Ausführungsform wird der Gesamtluftstrom aus der Summe aller Teilluftströme zusammengesetzt. Alternativ wird der Gesamtluftstrom zeit- und/oder zustandsabhängig aus einer entsprechenden Anzahl von Teilluftströmen zusammengesetzt. Hierdurch kann der gemeinsame Strömungskanal beispielsweise zeitversetzt zur Luftführung von einigen wenigen offenen oder allen Auslässen genutzt werden.

Die mit der Erfindung erzielten Vorteile bestehen insbesondere darin, dass durch einen gemeinsamen als Mehrkammerkanal ausgebildeten Strömungskanal für eine Luftverteilungsvorrichtung ein besonders geringes Bauvolumen bei Mehrfachnutzung des Strömungskanals für verschiedene Auslässe gegeben ist. Darüber hinaus ist eine einfache Temperierung des in den Innenraum geführten Teilluftstromes durch einfaches Mischen mittels Mischklappen ermöglicht. Somit ist die Luftverteilungsvorrichtung aufgrund niedriger Werkstoff- und Bauteilkosten besonders kostengünstig. Des Weiteren weist die Vorrichtung und der Strömungskanal selbst ein besonders geringes Gewicht auf. Durch die flexible Gestaltung des Strömungskanals sind standardisierte Bauteile möglich. Ferner sind strömungsgünstige Verschluß- und Drosselelemente durch einfache Abschnürungen oder Formen des Strömungskanals möglich. Der Strömungskanal ist somit als Leichtbaukanal einsetzbar.

Ausführungsbeispiele der Erfindung werden anhand einer Zeichnung näher erläutert. Darin zeigen:
- Fig. 1: schematisch eine Vorrichtung zur Luftverteilung in einem Fahrzeuginnenraum mit einem gemeinsamen Strömungskanal,
- Fig. 2: schematisch einen als Mehrkammerkanal ausgebildeten Strömungskanal im Querschnitt,
- Fig. 3: schematisch einen gemeinsamen Strömungskanal in Draufsicht,
- Fig. 4: schematisch eine weitere Vorrichtung zur Luftverteilung mit einem gemeinsamen Strömungskanal für eine zeit- und/oder zustandsabhängige Luftstromführung,
- Fig. 5A, 5B: schematisch einen Wärmetauscher mit einem mehrere Kammerkanäle umfassenden Mehrkammerkanal,
- Fig. 6A, 6B: schematisch einen Wärmetauscher mit einem Mehrkammerkanal als Vierkammerkanal mit anschließender Aufteilung in zwei Zweikammerkanäle mit einem Kalt- und Warmstromkanal,
- Fig. 7A, 7B: schematisch einen Wärmetauscher mit einen Mehrkammerkanal als Zweikammerkanal,
- Fig. 8A bis 8C: schematisch einen Wärmetauscher mit einem Mehrkammerkanal mit einem Mischkammerkanal,
- Fig. 9A, 9B: schematisch eine weitere Ausführungsform eines Wärmetauschers mit einem Mehrkammerkanal mit einem Mischkammerkanal,
- Fig. 10A bis: 10F schematisch einen Wärmetauscher mit einem Mischkammerkanal mit verschiedenen Misch- und/oder Sperrelementen,
- Fig. 11A bis: 11J schematisch verschiedene Querschnittsformen für einen Mehrkammerkanal,
- Fig. 12A bis: 12D schematisch verschiedene Mischelemente für einen Zweikammerkanal,
- Fig. 13A bis: 13E schematisch einen Strömungskanal mit einer aus zumindest teilweise verformbaren Material geformten Kanalwand,
- Fig. 14A bis: 14E schematisch das verformbare Material zur Bildung einer Kanalwand für einen Strömungskanal in Draufsicht,
- Fig. 15A bis 15I: schematisch verschiedene Ausführungsformen für einen schlauchartigen Strömungskanal,
- Fig. 16A bis 16F: schematisch verschiedene Fixierungsformen für einen schlauchartigen Strömungskanal,
- Fig. 17: schematisch einen als Vollschlauch ausgebildeten Strömungskanal,
- Fig. 18: schematisch einen als Halbschlauch ausgebildeten Strömungskanal, und
- Fig. 19A bis 19 C: schematisch verschiedene Sperr- oder Mischelemente für einen schlauchartigen Strömungskanal.

Einander entsprechende Teile sind in allen Figuren mit den gleichen Bezugszeichen versehen.

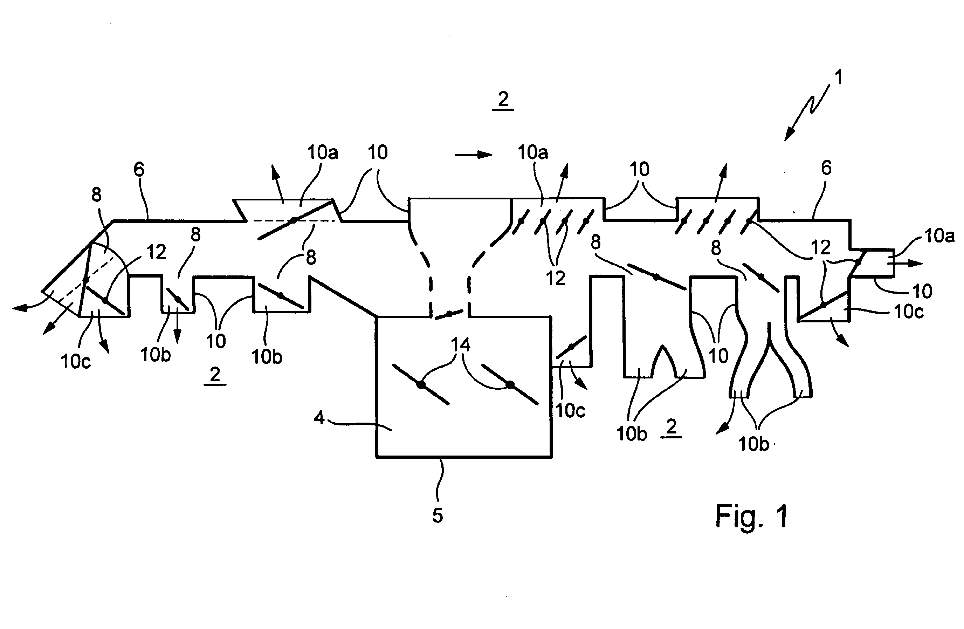

Figur 1 zeigt eine Vorrichtung 1 zur Luftverteilung im Innenraum 2 eines nicht näher dargestellten Fahrzeugs. Die Vorrichtung 1 umfasst ein Belüftungselement 4, welches je nach Ausstattungsgrad Bestandteil einer Klima- und/oder Heizungsanlage 5 sein kann. Zur Belüftung des Innenraums 2 ist an das Belüftungselement 4 ein Strömungskanal 6 angeschlossen. Der Strömungskanal 6 ist mit Austrittsöffnungen 8 versehen, welche unmittelbar in Auslässe 10 münden, die in den Innenraum 2 führen. Die Auslässe 10 sind bevorzugt als Düsen, insbesondere als verstellbare Düsen ausgebildet. Der Strömungskanal 6 ist dabei als ein für alle Auslässe 10 gemeinsamer Kanal ausgebildet.

Über das Belüftungselement 4 der Klima- und/oder Heizungsanlage 5 wird ein Gesamtluftstrom L mit einer einstellbaren Luftstrommenge erzeugt, die dem Strömungskanal 6 als ein gemeinsames Luftstromvolumen für alle Auslässe 10 zugeführt wird. Zur Entnahme einer anteiligen Luftstrommenge oder Teilluftstrom T am jeweiligen Auslass 10 sind in den Austrittsöffnungen 8 und/oder den Auslässen 10 Stellelemente 12, z.B. Entnahmeklappen angeordnet. Die Stellelemente 12 sind dabei zwischen zwei Endpositionen - geschlossene Stellung und offene Stellung - beliebig einstellbar. Neben den Stellelementen 12 an den Auslässen 10 zur anteiligen Luftzuführung in den Innenraum 2 können auch noch Mischelemente 14, z.B. Mischklappen an der Klimaanlage 5 zur gleichmäßigen Klimatisierung und/oder Temperierung des Gesamtluftstroms L vorgesehen sein. Des Weiteren ist eine Absperrklappe 15 für einen als Weitwurfdüse ausgebildeten Auslass 10 vorgesehen.

Durch eine derartige einen gemeinsamen Strömungskanal 6 nutzenden Vorrichtung 1 zur gleichmäßigen Luftverteilung und Klimatisierung können herkömmliche und stark verzweigte Belüftungskanäle entfallen. Durch den für alle Auslässe 10 gemeinsamen Strömungskanal 6 kann ein gegenüber herkömmlichen Belüftungsanlagen erforderliches Kanalwandmaterial um 20% bis 45% eingespart werden. Ein durch den gemeinsamen Strömungskanal 6 bedingter Nachteil hinsichtlich einer sehr beschränkten Temperaturschichtung, d.h. Temperaturunterschiede an den einzelnen Auslässen 10 oder Austrittsstellen, ist vernachlässigbar im Hinblick auf die deutliche Materialeinsparung und somit den Gewichtsgewinn durch Reduzierung von Kanalmaterial, da die Temperaturunterschiede durch eine entsprechende Regelung des ohne hin bereits einstellbaren Belüftungselements 4 und/oder der einstellbaren Klimaanlage 5 kompensiert werden können.

Beispielsweise sind die Stellelemente 12 in Abhängigkeit von der jeweiligen Position stets nur zeitweise geöffnet; z.B. wenn die Funktion "Enteisung/Defrost" betreffenden Auslässe 10a geöffnet sind, sind die zum Fußinnenraum mündenden Auslässe 10b geschlossen; umgekehrt, wenn die Auslässe 10b zum Fußinnenraum geöffnet sind, sind die Auslässe 10a zur Enteisung geschlossen. Zur Kompensation der fühlbaren Temperaturunterschiede bei einer derartigen Umsteuerung wird mittels des Belüftungselements 4 anhand des Mischelements 14 der Klimaanlage 5 die Temperatur entsprechend gewünschter Austrittstemperaturen gemischt und dem Strömungskanal 6 zugeführt. Ebenso sind die lediglich eine Belüftung erfüllenden Auslässe 10c stets dann offen, wenn die Enteisungsfunktion deaktiviert ist und umgekehrt.

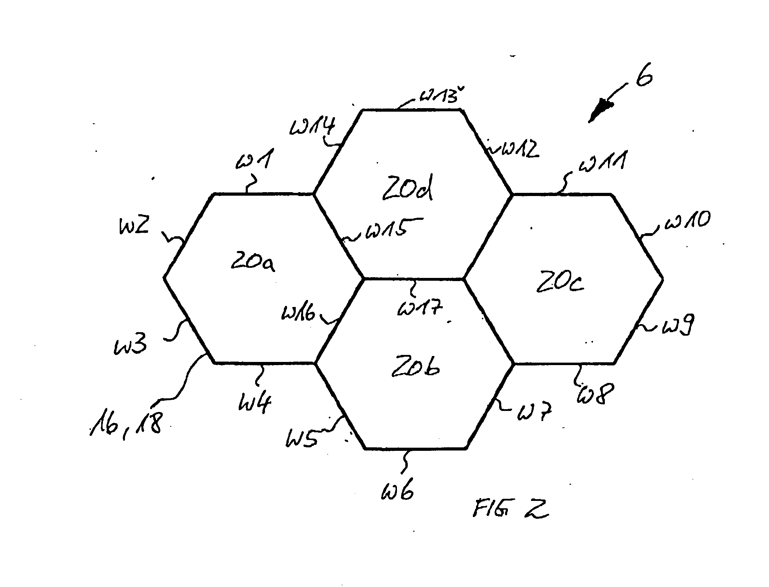

Figur 2 zeigt eine Ausführungsform für einen als Mehrkammerkanal 16 ausgebildeten Strömungskanal 6. Der Groß- oder Mehrkammerkanal 16 umfasst dabei vierzehn äußere Kanalwände w1 bis w14. Je nach Ausbildung des Mehrkammerkanals 16 kann dieser als ein Vierkammerkanal 18 mit vierzehn äußeren Kanalwände w1 bis w14 und fünf inneren Kanalwänden w15 bis w19 oder durch vier einzelne Kammerkanäle 20a bis 20d mit jeweils sechs Kanalwänden w, wobei der aus den Kammerkanälen 20a bis 20d gebildete Mehrkammerkanal 16 in Summe 24 Kanalwänden w1 bis w24 aufweist. Jeder Kammerkanal 20a bis 20d mündet bevorzugt in einen zugehörigen Auslass 10. Beispielsweise dient der Kammerkanal 20a der Funktion "Enteisung". Hierzu weist der Kammerkanal 20a entsprechende Austrittsöffnungen 8 auf, die in die Auslässe 10a münden. Die Kammerkanäle 20b und 20d dienen der Funktion "Belüftung" und führen über entsprechend angeordnete Austrittsöffnungen 8 in die Auslässe 10c. Der Kammerkanal 20c dient der Funktion "Fußraumbelüftung/-beheizung" und führt über die betreffenden Austrittsöffnungen 8 in die Auslässe 10b.

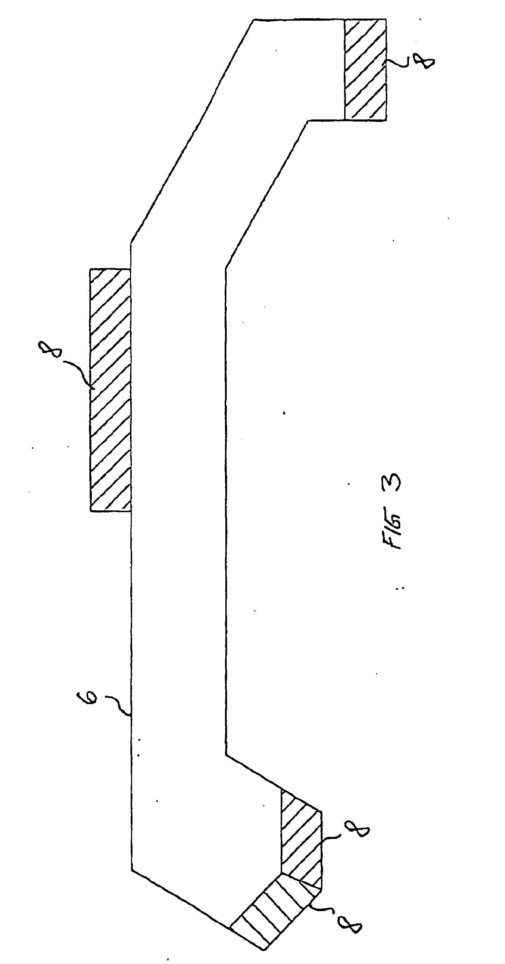

Figur 3 zeigt den Strömungskanal 6 in Draufsicht mit an verschiedenen Positionen angeordneten Austrittsöffnungen 8. Die Austrittsöffnungen 8 sind beispielsweise einfache einstellbare Düse. Dabei können die Austrittsöffnungen 8 oder Lüftungsdüsen als zentraler und/oder diffuser Austritt ausgebildet sein. Der Strömungskanal 6 weist dabei abschnittsweise einen runden und/oder halbrunden Verlauf auf.

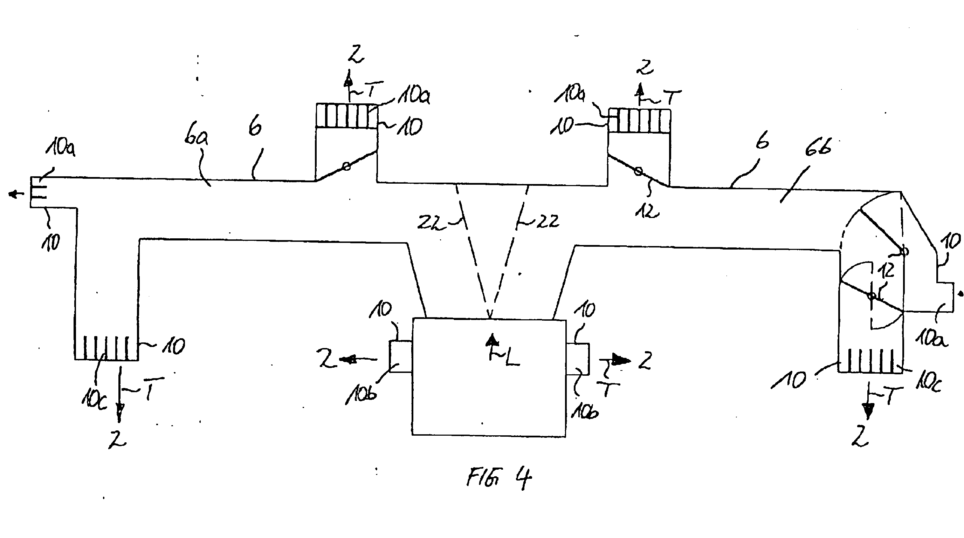

Figur 4 zeigt eine alternative Ausführungsform der Vorrichtung 1 mit einem an das Belüftungselement 4 mit Klimaanlage 5 angeschlossenen Strömungskanal 6. Dem Strömungskanal 6 wird ein Gesamtluftstrom L zugeführt, der über die Auslässe 10 mittels zugehöriger Teilluftströme T in den Innenraum 2 geführt wird. Dabei wird je nach Einstellung der Klimaanlage 5 der Strömungskanal 6 zeit- oder zustandsabhängig mit einem Gesamtluftstrom. L, der in Abhängigkeit von der jeweiligen Einstellung aus einer entsprechenden Anzahl von Teilluftströmen T zusammengesetzt wird, gespeist.

Beispielsweise werden bei der Einstellung der Klimaanlage 5 auf "Enteisung" lediglich die die Enteisung betreffenden Auslässe 10a geöffnet und beströmt; die die Belüftung betreffenden Auslässe 10b und 10c bleiben geschlossen und umgekehrt. Hierdurch wird der Strömungskanal 6 sinngemäß doppelt genutzt, d.h. er wird zeitlich und/oder zustandsabhängig unterschiedlich genutzt. Hierzu weist der Strömungskanal 6 zusätzlich bei den Auslässen 10a (sowohl bei der Frontenteisung als auch bei der Seitenenteisung) Stellelemente 12, insbesondere ein Sperrelemente, z.B. eine Klappe auf. Des Weiteren kann der jeweilige Auslass 10 in nicht näher dargestellter Art und Weise mit einem Sensor zur Erfassung von betriebsrelevanten Daten, z.B. zur Erfassung der Temperatur, des Taupunktes oder der Luftmenge, versehen sein. Folgende Stellungen bzw. Zustände sind über drei in den Auslässen 10 angeordneten Stellelementen 12 je Fahrzeugseite mittels der Klimaanlage 5 einstellbar:

**Tabelle 1**

| | Frontenteisung | Seitenenteisung | Seitenbelüftung |
|---|---|---|---|
| Klappenstellung | Zu | Zu | Zu |
| Klappenstellung | Auf | Zu | Zu |
| Klappenstellung | Auf | Auf | Zu |
| Klappenstellung | Zu | Auf | Zu |
| Klappenstellung | Zu | Auf | Auf |
| Klappenstellung | Zu | Zu | Auf |

Bei Bedarf sind auch Zwischenstellungen der Stellelemente 12 möglich, z.B. für Funktionen "Antifogging" zur Beaufschlagung der Windschutzscheibe mit einem geringen Luftstrom. Für einen sowohl eine Seitenbelüftung, eine Seiten- und Frontscheibenenteisung als auch eine Fußbelüftung ermöglichenden Gesamtluftstrom L ist vorzugsweise der Strömungskanal 6 mit Leitelementen 16, z.B. Zwischenwände oder Klappen, versehen.

Durch einen derartigen, alle Auslässe 10 speisenden gemeinsamen Strömungskanal 6 nach den Figuren 1 und 4 ist beispielsweise ein derartig kompaktes Bauvolumen ermöglicht, dass je Seitenbelüftungskanal 6a und 6b des Strömungskanals 6 gegenüber einer herkömmlichen, viele Kanäle aufweisenden Belüftungsanlage mindestens 5 Liter Bauvolumen bei 0,3 kg Blasteilgewicht eingespart wird. Demgegenüber weisen herkömmliche Belüftungsanlagen ein Bauvolumen von 30 bis 65 Liter auf. Je nach Ausführung und Vorgabe kann eine Mehrkammerkanäle 16 umfassende Klima- und/oder Heizungsanlage 5 ein um 30% bis 50% geringeres Bauvolumen aufweisen.

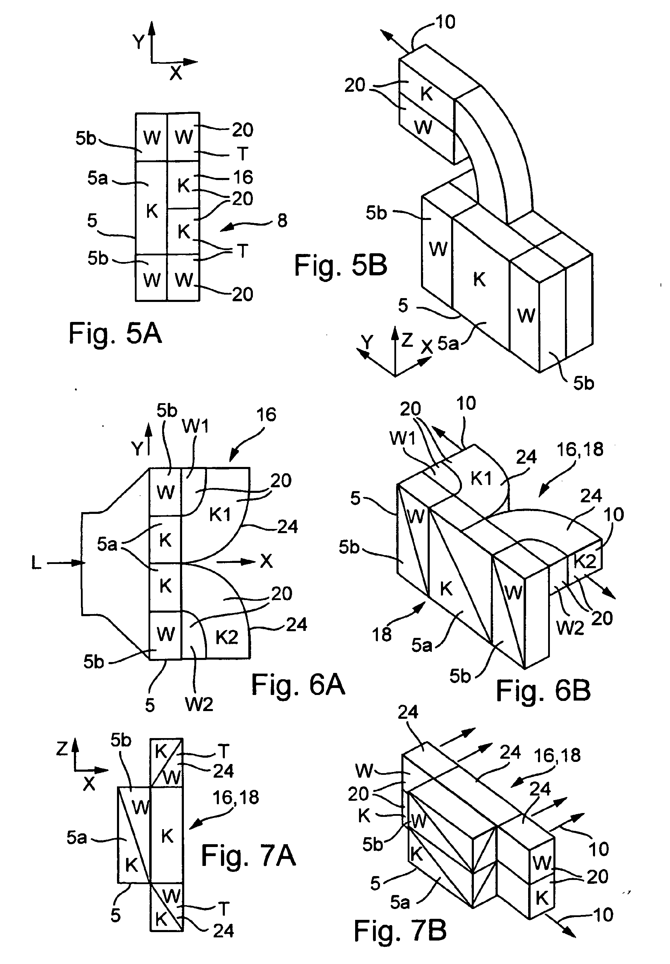

Die Figuren 5A bis 5B zeigen eine mögliche Ausführungsform für eine Klima- und/oder Heizungsanlage 5 mit einem daran angeschlossenen Mehrkammerkanal 16 nach einer der Figuren 1 bis 4 mit mehreren Kammerkanälen 20 in Draufsicht bzw. in perspektivischer Darstellung. Die Klima- und/oder Heizungsanlage 5 umfasst dabei in den nachfolgenden Figuren verschiedenartige Wärmetauscheranordnungen, wobei ein Wärmetauscher 5a zur Erzeugung eines Kaltluftstroms K, z.B. ein Verdampfer, und ein Wärmetauscher 5b zur Erzeugung eines Warmluftstroms W, z.B. ein Heizkörper, in einem Luftverteilergehäuse einer Klimaanlage 5 mit daran angeschlossenen Kammerkanälen 20 als Kanalabgängen vorgesehen sind. Die in Luftströmungsrichtung gesehen nebeneinander angeordneten Wärmetauscher 5a und 5b mit separaten Kammerkanälen 20 für den Kaltluftstrom K bzw. den Warmluftstrom W repräsentieren eine Klimaanlage 5 ohne Reheat-Betrieb. Die jeweiligen Kammerkanäle 20 sind somit als Kaltstromkanal K oder Warmstromkanal W ausgebildet.

Die Figuren 6A und 6B zeigen eine weitere Ausführungsform für einen Klima- und Heizungsanlage 5 mit einem als Mehrkammerkanal 16 ausgebildeten Strömungskanal 6. Dabei wird der vom Belüftungselement 4 erzeugte Gesamtluftstrom L den Wärmetauschern 5a und 5b zur separaten Kühlung bzw. Aufheizung von aus dem Gesamtluftstrom L gebildeten Kaltluftströmen K bzw. Warmluftströmen W zugeführt. Die Kaltluftströme K und die Warmluftströme W werden dem als Vierkammerkanal 18 ausgebildeten Mehrkammerkanal 16 zugeführt. Der Vierkammerkanal 18 umfasst vier einzelne Kammerkanäle 20 unterteilt in zwei Kaltstromkanäle K1, K2 und zwei Warmstromkanäle W1, W2. Zur Verteilung des Gesamtluftstroms L über die Auslässe 10 entlang der Querrichtung und/oder Längsrichtung des Fahrzeuginnenraums 2 wird der Vierkammerkanal 18 in zwei Zweikammerkanäle 24 mit jeweils einem Kaltstromkanal und einem Warmstromkanal K1, W1 bzw. K2, W2 unterteilt.

Die Figuren 7A und 7B zeigen einen weitere Klima- und Heizungsanlage 5 mit Wärmetauschern 5a, 5b Mehrkammerkanal 18 mit Zweikammerkanälen 24 zur Luftverteilung entlang der Längs- und/oder Querseite des Fahrzeuginnenraumes 2. Je nach Anordnung der Wärmetauscher 5a, 5b ist bei einer Mischung des Kaltluftstroms K und des Warmluftstroms W ein Solekreislauf KW gebildet. D.h. die dargestellten Mehrkammerkanäle 16 sind zur Mischung des Kaltluftstroms K mit dem Warmluftstrom W unmittelbar an die Wärmetauscher 5a, 5b - Verdampfer und Heizer - der Klimaanlage 5 angeschlossen. Alternativ kann am Ende der Kanäle 20 ein Mischen am Ausströmer oder Auslass 10 erfolgen.

Die in den Figuren 7A bis 7B entlang der Querseite und/oder Längsseite verlaufenden Zweikammerkanäle 24 weisen in der bereits oben beschriebenen Art und Weise Austrittsöffnungen 8 mit Auslässen 10 zum Zuführen des jeweiligen Teilluftstroms T in den Innenraum 2 auf. Dabei wird der Teilluftstrom T durch Entnahme aus dem warmen und/oder kalten Gesamtluftstrom L an der betreffenden Austrittsöffnung 8 gebildet. Je nach Art und Ausbildung der jeweiligen Austrittsöffnung 8 und/oder des Auslasses 10 kann für eine individuelle Temperierung durch entsprechende Stellelemente 12, z.B. eine Mischklappe, der entnommene anteilige Kaltluftstrom K mit dem Warmluftstrom W an der betreffenden Auslassstelle gemischt werden.

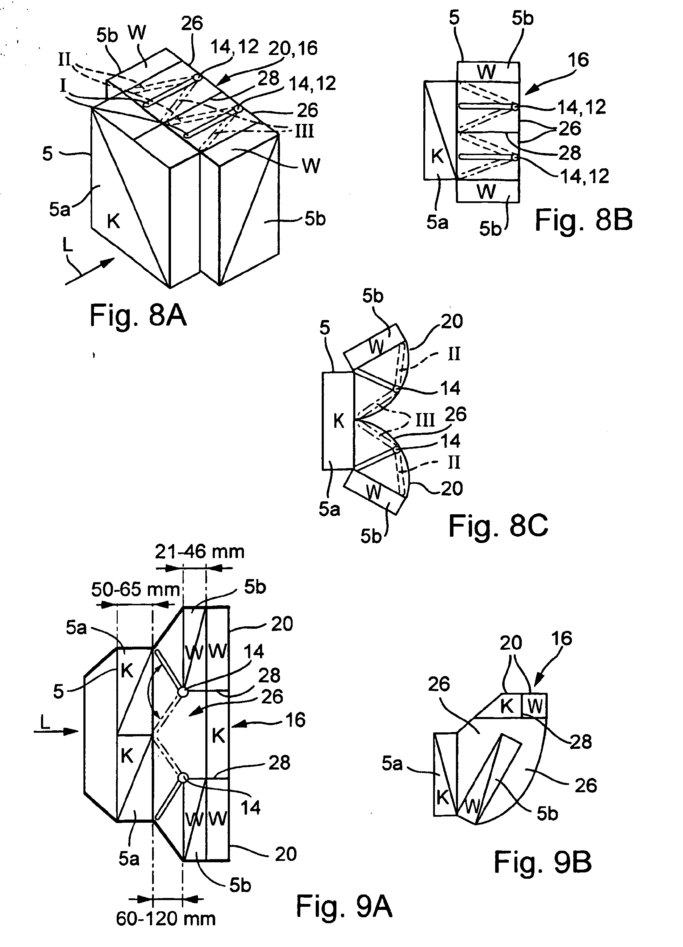

Die Figuren 8A bis 8C sowie 9A bis 9B zeigen verschiedene Ausführungsformen für eine Klima- und/oder Heizungsanlage 5 für einen sogenannten Reheat-Betrieb durch Mischung des Kaltluftstromes K mit dem Warmluftstrom W. Hierzu ist in Luftströmungsrichtung L der als Verdampfer ausgebildete Wärmetauscher 5a vor dem als Heizer ausgebildeten Wärmetauscher 5b angeordnet. Hierdurch wird der im Wärmetauscher 5a erzeugte Kaltluftstrom K durch Mischung mit dem vom nachgeschalteten Wärmetauscher 5b. erzeugten Warmluftstrom W entfeuchtet und getrocknet. Je nach Art und Ausführung des an die Klimaanlage 5 angeschlossenen Strömungskanals 6 sind die Kammerkanäle 20 als zwei durch eine Trennwand 28 getrennte Kammern eines einzelnen Kanals oder als zwei voneinander getrennte Kanäle ausgeführt. Die Kammerkanäle 20 zur Führung der entfeuchteten und getrockneten Luft werden bevorzugt entlang der Quer- und Längsrichtung des Fahrzeug in der Art einer Ringleitung geführt. Zum Mischen des Warmluftstroms W mit dem Kaltluftstrom K ist strömungsausgangsseitig nach den Wärmetauschern 5a, 5b ein Kammerkanal 20 als Mischkammerkanal 26 oder Mischkammer angeordnet. Dabei ist im Mischkammerkanal 26 ein Mischelement 14, z.B. eine Mischklappe angeordnet.

Bei dem Ausführungsbeispiel nach den Figuren 8A bis 8C bilden zwei jeweils einen Warmluftstrom W erzeugende Wärmetauscher 5b die Schenkel einer U-Anordnung und der den Kaltluftstrom K erzeugende Wärmetauscher 5a die geschlossene Unterseite der U-Anordnung. Zwischen den Schenkel der U-Anordnung sind zwei Mischkammern oder -kanäle 26 angeordnet. Je Mischkammerkanal 26 ist ein Stellelement 12, insbesondere ein Mischelement 14 (=Weiche) vorgesehen. In der mittleren Stellung I setzt sich der im Mischkammerkanal 26 geführte Teilluftstrom T aus 50% Warmluftstrom und 50% Kaltluftstrom zusammen. Der so vorgewärmte Teilluftstrom T wird über die Austrittsöffnung 8 dem Auslass 10 zugeführt. Alternativ kann durch getrennte Ausführung der Kammerkanäle 20 aus dem jeweiligen Kaltluftstrom K und/oder dem Warmluftstrom W der jeweilige Teilluftstrom T direkt über zugehörige Austrittsöffnungen 8 entnommen, dem Auslass 10 zugeführt und erst an diesem individuell gemischt werden. Die Stellung II des Mischelements 14 bewirkt einen Kaltluftstrom von 100% und die Stellung III einen Warmluftstrom von 100%. Um eine beliebige Temperatur einstellen zu können, ist das Mischelement 14 beliebig einstellbar.

Darüber hinaus kann die Klima- und Heizungsanlage 5, wie in den Figuren 9A und 9B dargestellt, mehrfach unterteilt werden, so dass eine Anordnung von zwei als Verdampfer ausgebildeten Wärmetauscher 5a unter Nachschaltung einer Mischkammer 26 mit zwei als Heizer ausgebildeten Wärmetauscher 5b und daran angeschlossenen drei Kammerkanälen 20 die Klimaanlage 5 mit Reheat-Betrieb bilden. Je nach Stellung der Mischelemente 14 im Mischkammerkanal 26 und Einstellung der Wärmetauscher 5a, 5b sind verschiedene Temperaturbereiche zwischen halbwarm und warm sowie halbkalt und kalt einstellbar. Beispielhaft sind in der Figur 9A die Abmessungen der Wärmetauscher 5a, 5b, insbesondere deren Bautiefe mit Bereichen von 21 mm bis 46 mm, von 50 mm bis 65 mm sowie von 60 mm bis 120 mm für die Einstellung des zu erzeugenden Kaltluftstroms K dargestellt. Die Bautiefe und die Einstellungsbereiche variieren dabei in Abhängigkeit von der Art, Größe und Typ der zugrundeliegenden Klimaanlage 5. Die Figur 9B zeigt eine alternative Anordnung für eine Klimaanlage 5 mit Reheat-Betrieb, wobei der den Kaltluftstrom K erzeugende Wärmetauscher 5a quer zum Luftstrom und der den Warmluftstrom W erzeugende Wärmetauscher 5b in einer Biegung bei einem um eine Biegung verlaufenden Strömungskanal 6 zur Entfeuchtung und Trocknung der Luft angeordnet ist.

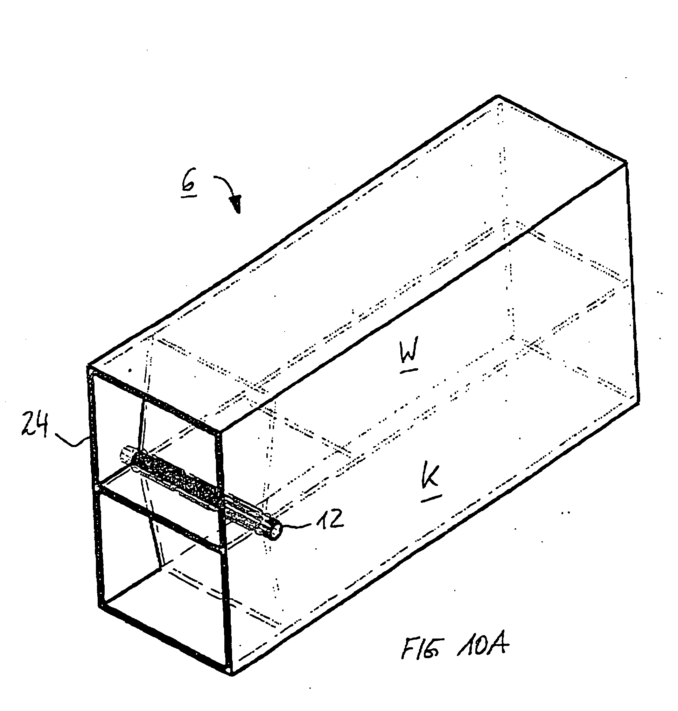

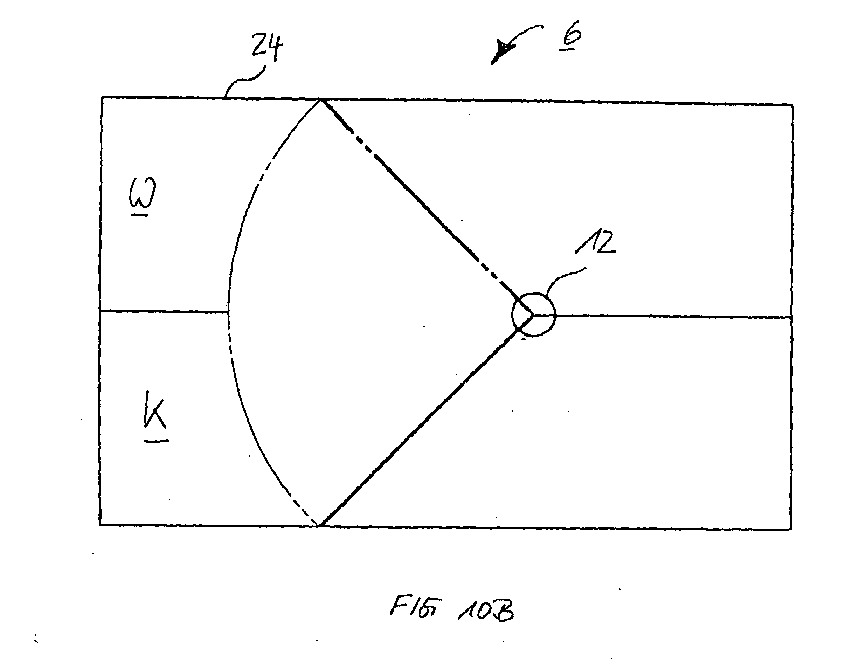

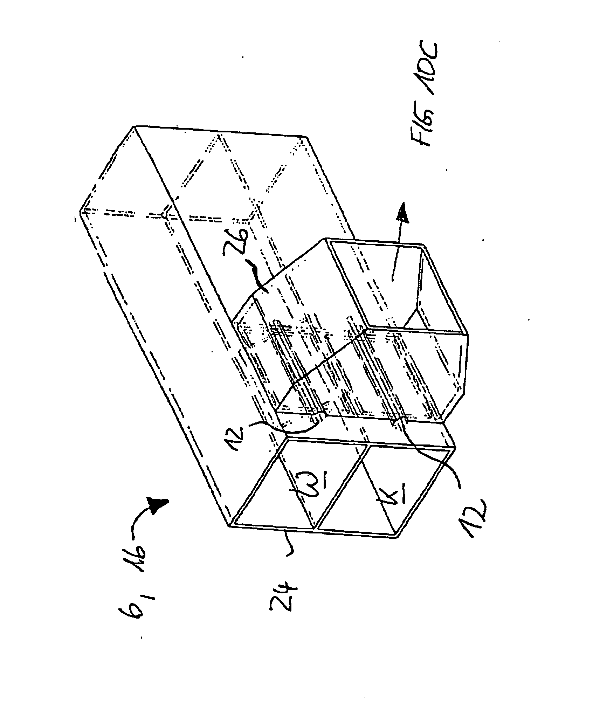

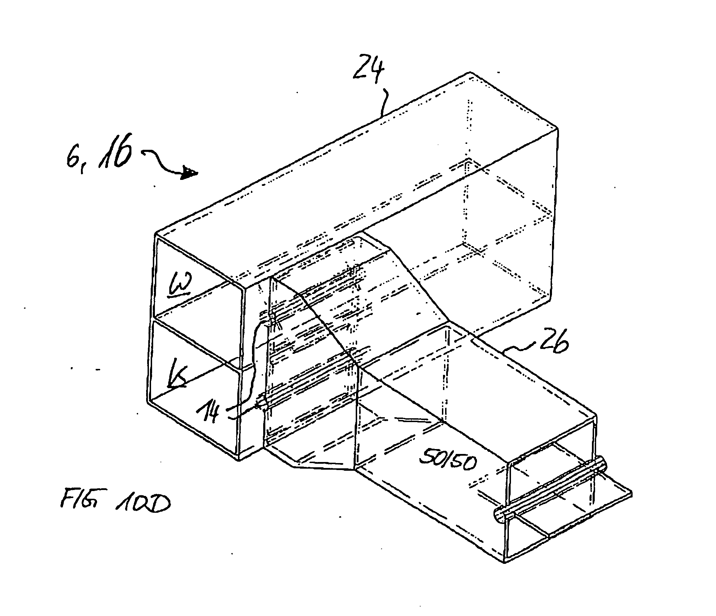

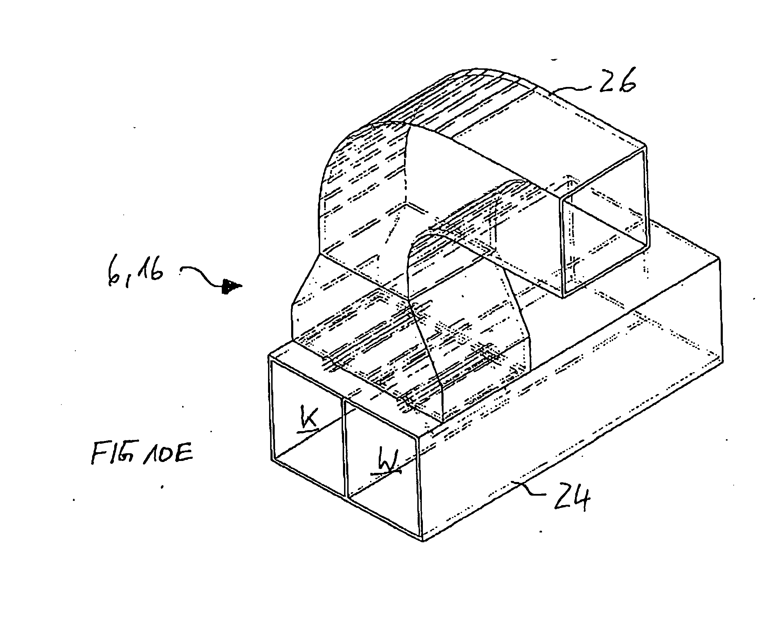

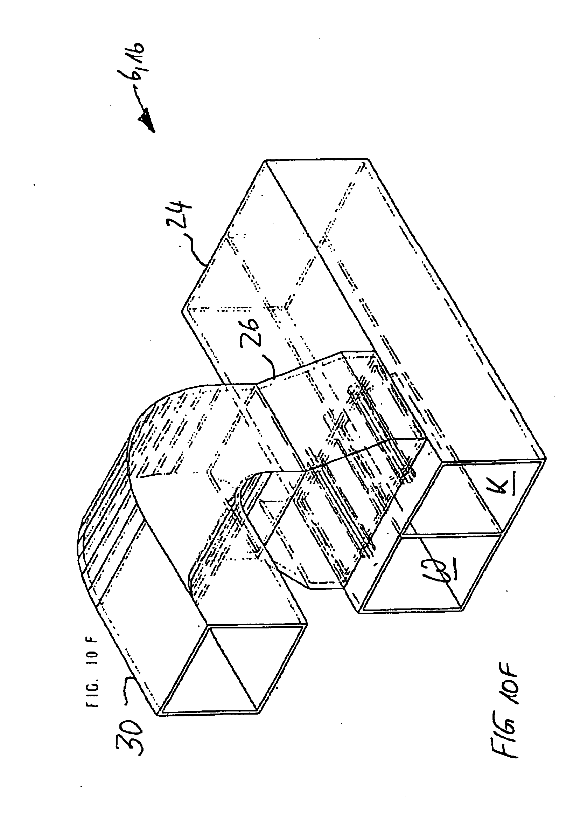

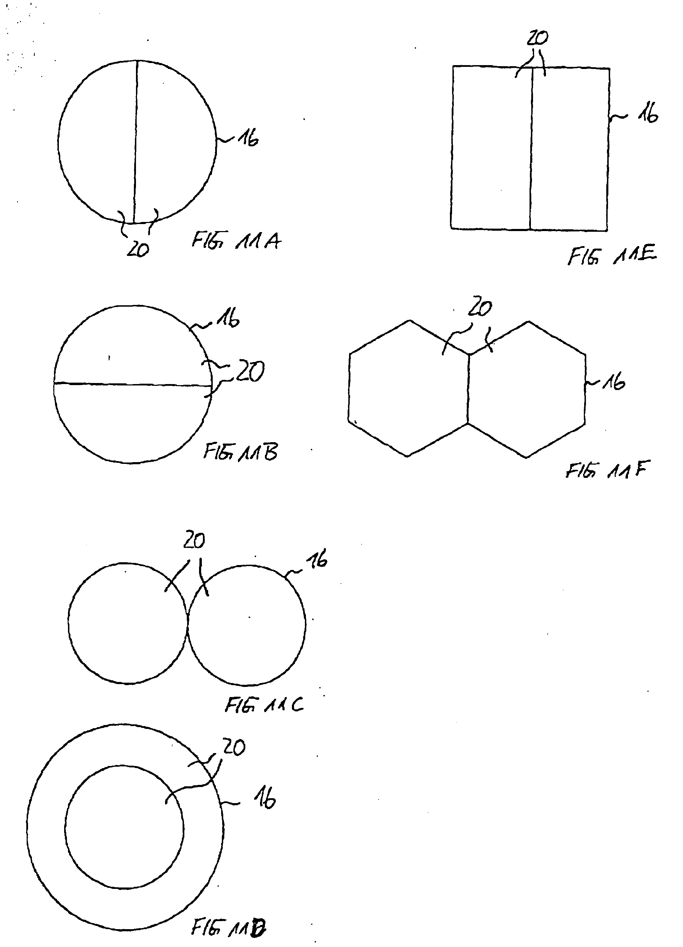

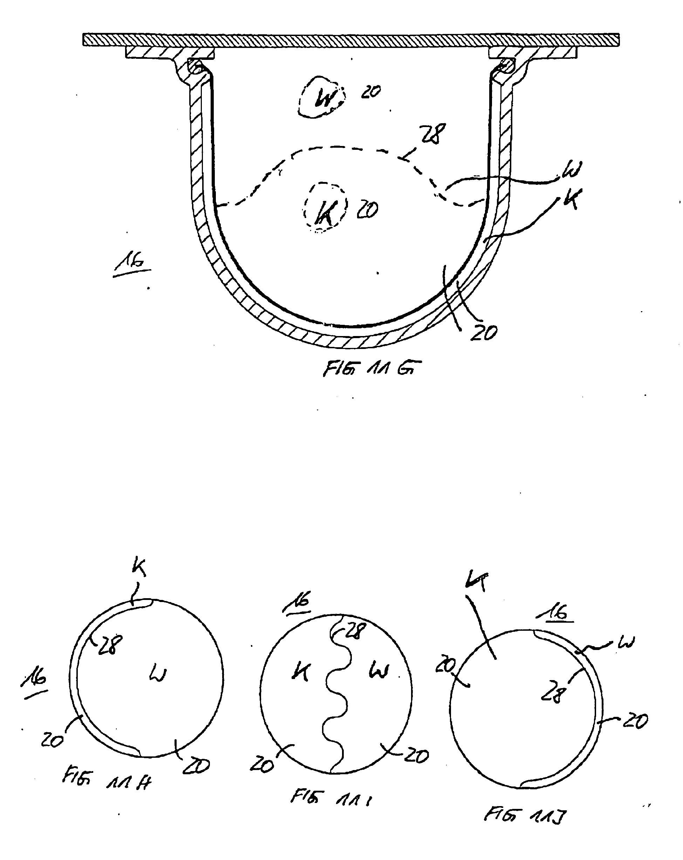

Die Figuren 10A bis 10F zeigen verschiedene Ausführungsformen für einen an einen Zweikammerkanal 24 mündenden Mischkammerkanal 26 mit verschiedenartigen Mischelementen 14 und/oder Stellelementen 12. Dabei erfolgt die Mischung des Kaltluftstromes mit dem Warmluftstrom anhand der Mischelemente 14 und/oder der Stellelemente 12 (Figuren 10B bis 10D) und/oder durch die Kanalführung selbst, indem z.B. zwei Kammern oder Kammerkanäle 20, z.B. ein Zweikammerkanal 24, in eine große Kammer oder Kammerkanal 20, z.B. in einen Einkammerkanal 30 münden (Figur 10E, 10F). In den Figuren 11A bis 11J sind verschiedene Querschnittsformen für einen Mehrkammerkanal 16 dargestellt. Beispielsweise mit nebeneinander geführten Kammerkanälen 20 (Figuren 11A bis 11C, 11 E bis 11F), wobei die Achse quer und/oder längs zur Strömungsrichtung verläuft, oder ineinander geführten Kammerkanälen 20 (Figur 11D). Die Figuren 11G bis 11J zeigen eine weitere Ausführungsform für einen Mehrkammerkanal 16, dessen Kammerkanäle 20 durch eine elastische, formbare und/oder faltbare Trennwand 28, welche in den Mehrkammerkanal 16 angeordnet ist, gebildet sind. Dabei ist die Trennwand 28 beispielsweise aus elastischem Material oder einer Folie, welche ggf. auch länger als eine gerade Wand ausgebildet sein kann.

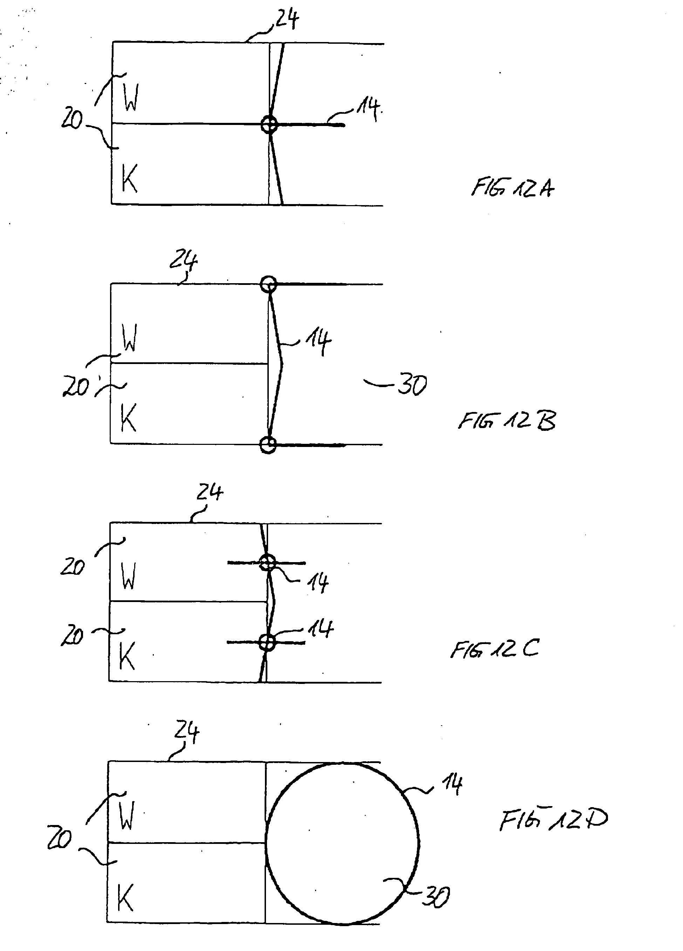

Die Figuren 12A bis 12D zeigen verschiedene Mischelemente 14 für einen Zweikammerkanal 24. Figur 12A zeigt ein beide Kammerkanäle 20 abdekkendes Mischelemente 14 in Form einer um mindestens 180% schwenkbaren Mischklappe. Entsprechend können verschiedene Mischelemente 14 oder Stellelemente 12, z.B. Schmetterlingsklappen oder zwei einzelne Klappen mit gemeinsamer Achse, vorgesehen sein. Figur 12B zeigt den Übergang eines Zweikammerkanals 24 in einen Einkammerkanal 30. Dabei ist die Oberfläche der Innenseite der Kammerkanäle 20 derart ausgebildet, dass Verwirbelungen und/oder Todwasserzonen sicher vermieden sind. Dazu ist die Kanalwand der Kammerkanäle 20 bevorzugt elastisch, insbesondere gummiartig ausgebildet. Figuren 12C und 12D zeigen zur Mischung der Teilluftströme T je Kammerkanal 20 ein zugehöriges als Klappe oder Weiche ausgebildetes Mischelement 14 mit einem Schwenkbereich von 180° bzw. 360°.

Je nach Art und Ausführung der Vorrichtung 1 zur Luftverteilung kann diese den Wärmetauscher 5a (= Kälteerzeuger, insbesondere Verdampfer) und/oder den Wärmetauscher 5b (= Wärmeerzeuger, insbesondere ein Heizelement) umfassen, wie oben in den verschiedenen Ausführungsformen für Klima- und/oder Heizanlagen 5 beschrieben. Des Weiteren kann in Abhängigkeit von der Auslegung der Klimaanlage 5 ein Reheat-Betrieb (= Trocknung) möglich sein. Zusätzlich kann ein separater Trockner vorgesehen sein. Um die Strömungsgeschwindigkeit im Strömungskanal 6 auch bei maximalem Kühlen oder Heizen niedrig zu halten, umfasst der Strömungskanal 6 eingangsseitig bevorzugt einen Zweikammerkanal 24, welcher über ein Stellelement 12 oder eine Verteileinrichtung mit kalter oder warmer Luft beaufschlagt wird. Hierdurch wird der Gesamtkanalquerschnitt des Strömungskanals 6 genutzt. Alternativ kann auch nur eine Kanalkammer oder ein Kammerkanal 20 maximal warm oder maximal kalt durchströmt werden und der zweite Kammerkanal 20 vortemperiert werden, wobei an der jeweiligen einem Auslass 10 zugehörigen Austrittsöffnung 8 die beiden Luftströme entsprechend der gewünschten Temperatur gemischt werden. Hierdurch kann der Gesamtkanalquerschnitt des Strömungskanals möglichst klein, in einem Bereich von 6000 mm² bis 12000 mm² ausgeführt werden.

In bevorzugter Ausführung ist der beschriebene Strömungskanal 6 in einer Schicht verlaufend im Fahrzeug angeordnet. Beispielsweise ist der Strömungskanal 6 im Bereich einer Stirnwand oder direkt unterhalb einer Instrumententafel und quer im Fahrzeug angeordnet. Hierdurch kann der Strömungskanal 6 unabhängig von seiner Lage durch sein Hohlprofil zusätzlich der Aussteifung dienen. Des Weiteren können Funktionselemente, z.B. Airbag oder Lenksäule, am Strömungskanal 6 befestigt werden. Bei einer eine Queraussteifung vorgesehenen Funktion des Strömungskanals 6 ist dieser bevorzugt sandwichartig ausgebildet.

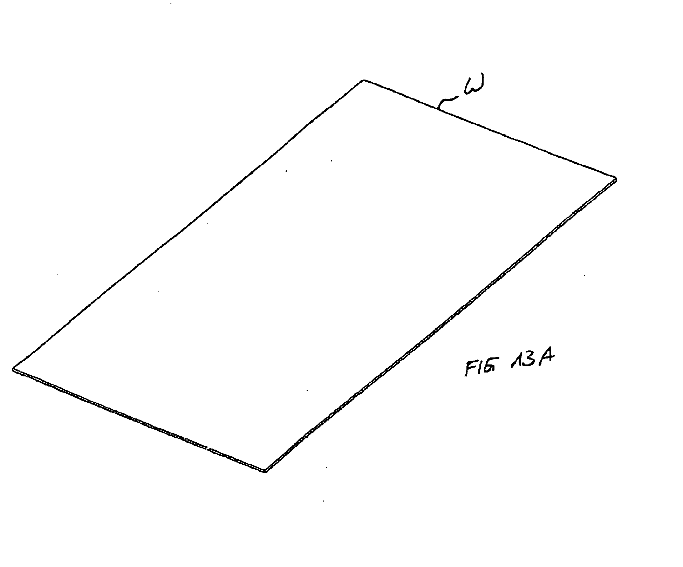

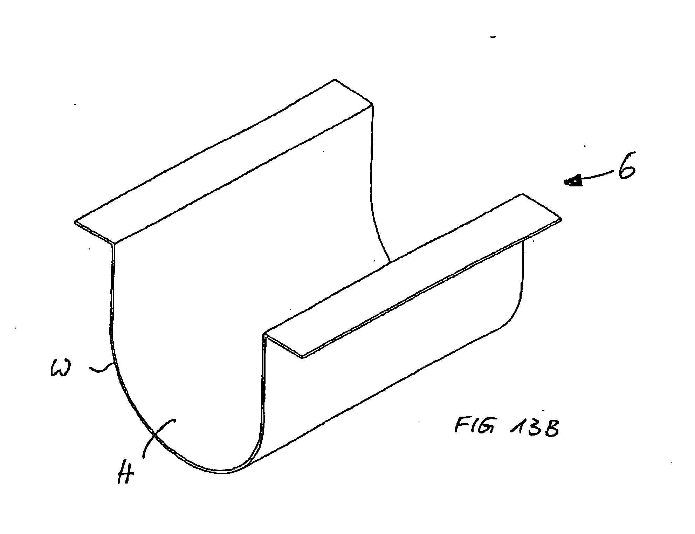

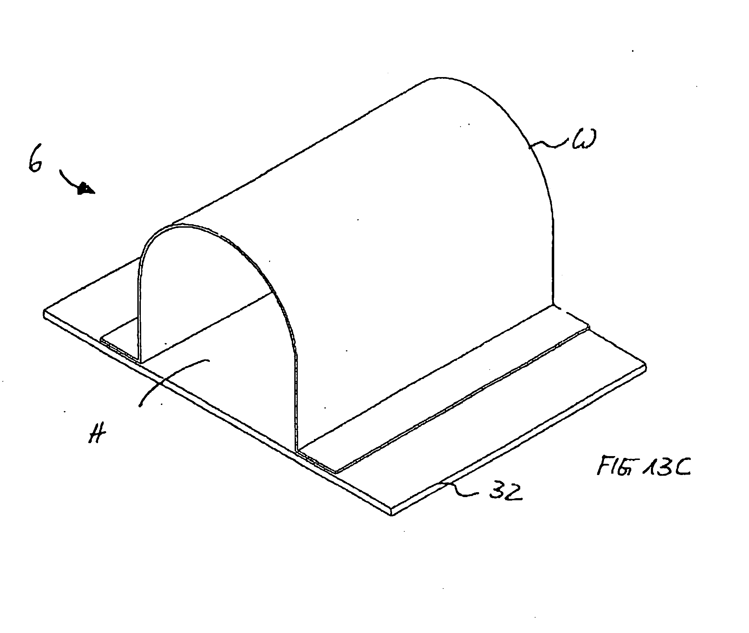

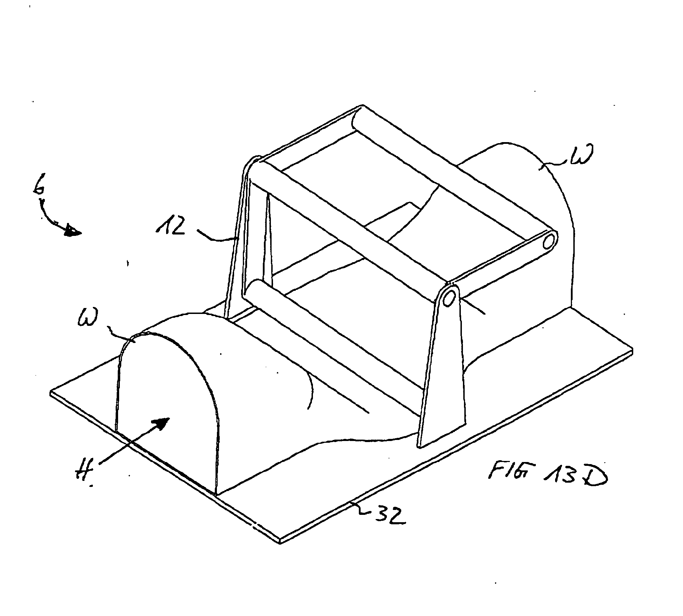

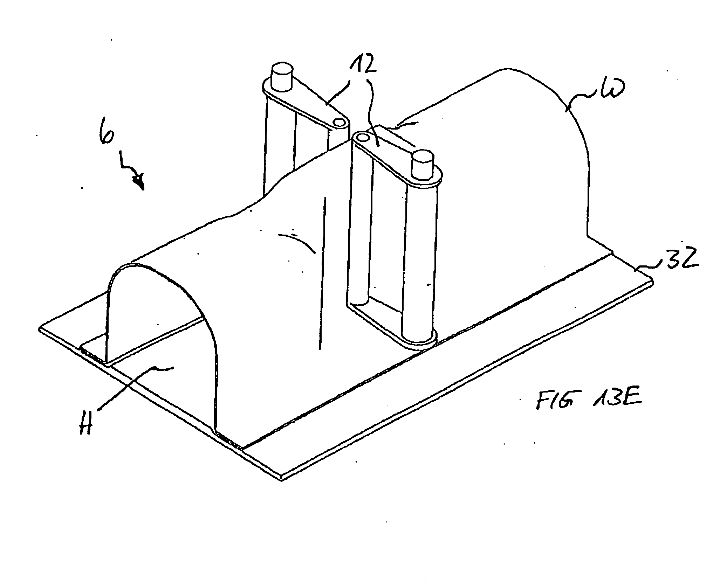

Für eine besonders gewichtsarme und somit leichte Ausführung der Vorrichtung 1 weist der Strömungskanal 6 eine Kanalwand w aus einem zumindest teilweise verformbaren Material auf. In den Figuren 13A bis 13E ist eine mögliche Ausführungsform für einen derartigen flexiblen Strömungskanal 6 mit einer geformten Kanalwand w dargestellt. Dabei ist der Strömungskanal 6 unter Bildung eines schlauchartigen Hohlraums H lösbar oder unlösbar an eine formfeste Fläche 32 befestigt. Die Kanalwand w ist beispielsweise aus einer Folie oder einem Gewebe u-förmig oder Ω-förmig gefaltet und an die formstabile Wand oder Fläche 32, z.B. eine Karosseriefläche oder eine Innenverkleidung des Fahrzeugs, gefügt, z.B. geclipt, geklemmt, geschweißt, geklebt. Zwischen der formstabilen Wand 32 und der Kanalwand w entsteht der Hohlraum H, in welchem der Gesamtluftstrom L geführt wird. Der Strömungskanal 6 kann mit Austrittsöffnungen 8 versehen sein, durch welche ein Teilluftstrom T zum Auslass 10 austreten kann. Die Figur 13C zeigt dabei einen offenen und durchströmbaren Strömungskanal 6; Figuren 13D und 13E einen mittels eines Stellelements 12 geschlossenen Strömungskanal 6. Das Stellelement 12 kann dabei aufgrund der flexiblen Kanalwand 6 durch Einschnürungen oder Abdrückungen gebildet sein. Hierdurch sind einfache Drossel- und/oder Absperrfunktionen ermöglicht, welche wiederum zu einem material- und somit gewichtssparenden sowie platzsparenden Strömungskanal 6 führen.

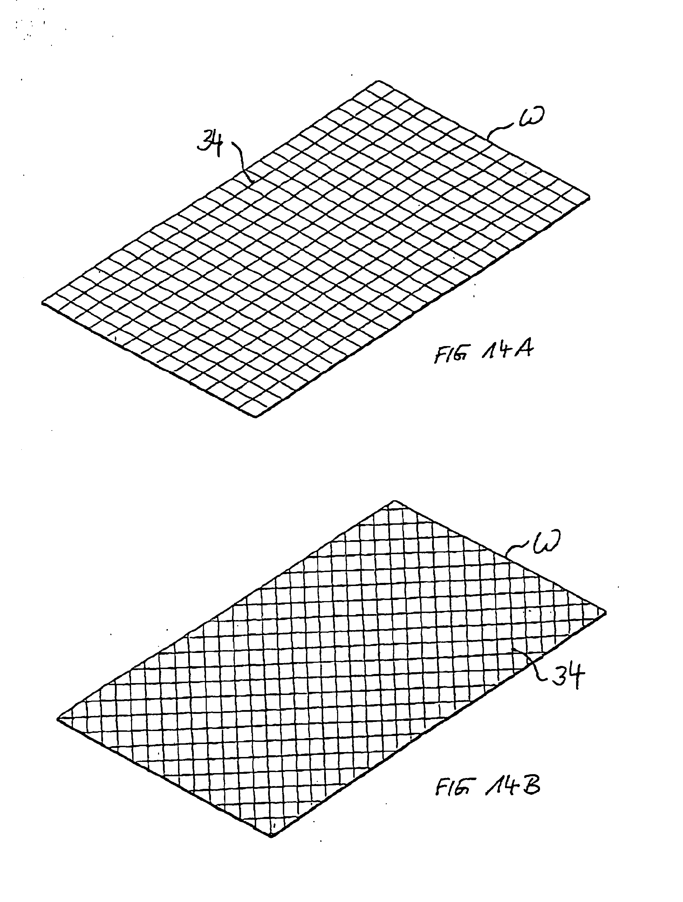

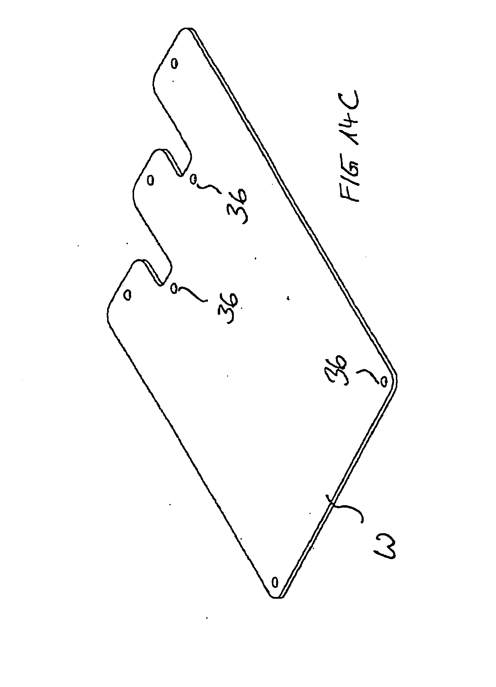

Die Figuren 14A bis 14E zeigen verschiedene Ausführungsformen für das verformbare Material der Kanalwand w für den Strömungskanal 6 in Draufsicht. Zur Verstärkung und gegen ein Zusammenfallen oder Zusammenkleben der flexiblen Kanalwand w kann das verformbare Material mit einem Verstärkungsgewebe 34, z.B. einer netzförmigen Struktur versehen sein (Figuren 14A, 14B). Das Verstärkungsgewebe 34 kann 3-dimensional ausgebildet sein. Hierdurch ist eine besonders einfache Formgebung des Strömungskanals 6 ermöglicht. Darüber hinaus kann die Kanalwand w aus beliebig unterschiedlichen Lagen oder Schichten ausgeführt, wie oben bereits beschrieben. Insbesondere kann die Kanalwand w aus mehreren geschichteten Folien gebildet sein, die ggf. von einem festen Material umgeben sind. Dies führt zu besonders guten akustischen und thermischen Isolationseigenschaften des Strömungskanals 6. Dabei kann der Strömungskanal 6 bereichs- oder abschnittsweise, z.B. in Abhängigkeit vom jeweiligen Einbauort, wechselnde Schichtaufbauten für die Kanalwand w aufweisen. Figur 14C zeigt eine Ausführungsform zur Befestigung des Strömungskanals 6 an der formstabilen Fläche 32. Dazu weist die das großflächige Material der Kanalwand w Lochungen 36 auf, welche zum Fixieren oder Positionieren der Folie oder des Gewebes an der Fläche 32 vorgesehen sind.

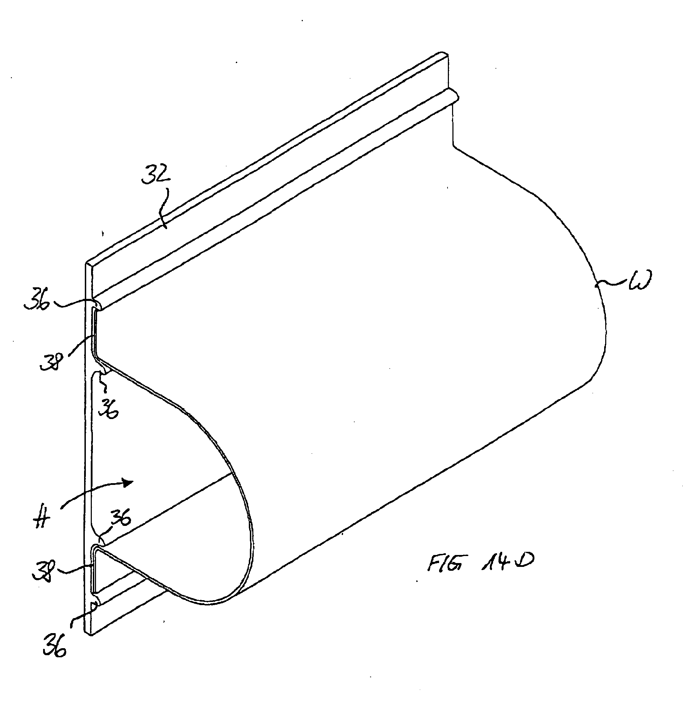

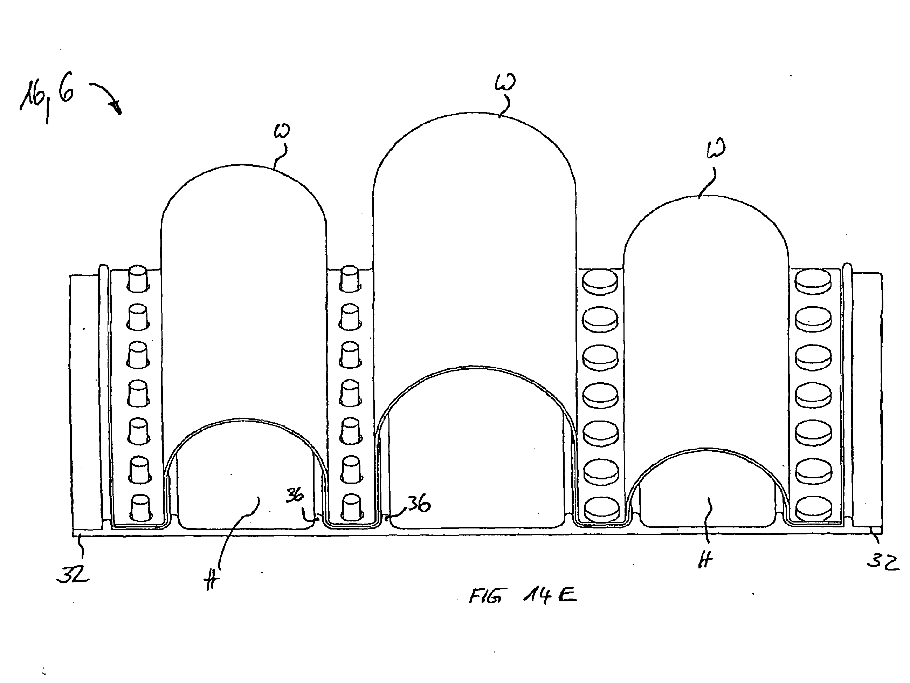

In den Figuren 14D bis 14E ist die Folie oder das Gewebe der Kanalwand w unter Bildung eines einzelnen Hohlraumes H (= Einkammerkanal 30, Figur 14D) oder mehrerer Hohlräume H (= Mehrkammerkanal 16, Figur 14E) an die Fläche 32 befestigt. Die formstabile Fläche 32 weist zur Fixierung der Kanalwand w Erhöhungen 36, z.B. sogenannte Fixiernasen, Rippen oder Noppen auf. In zwischen den Erhöhungen 36 gebildeten Vertiefungen 38 ist die Kanalwand w gefügt, z.B. geklebt oder verschweißt. Alternativ ist in Figur 14E die Kanalwand w an die formstabile Fläche 32 lösbar genietet oder geschraubt.

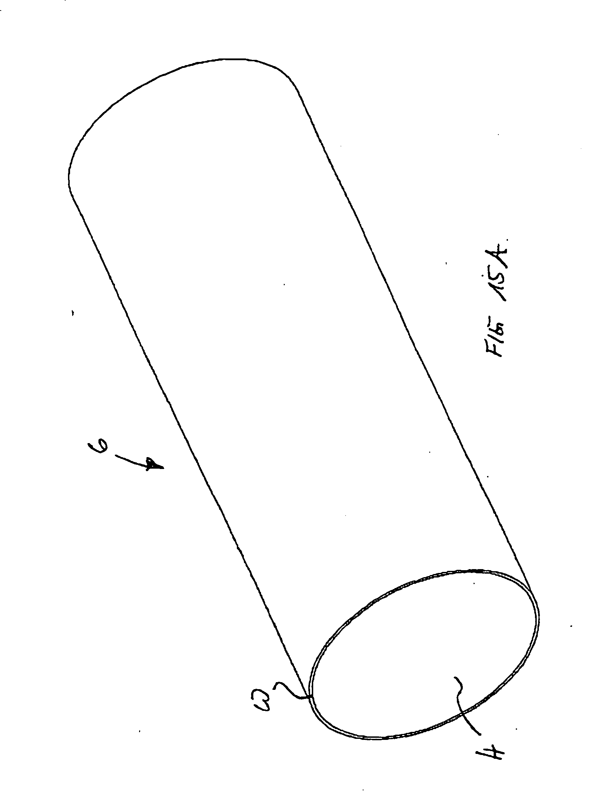

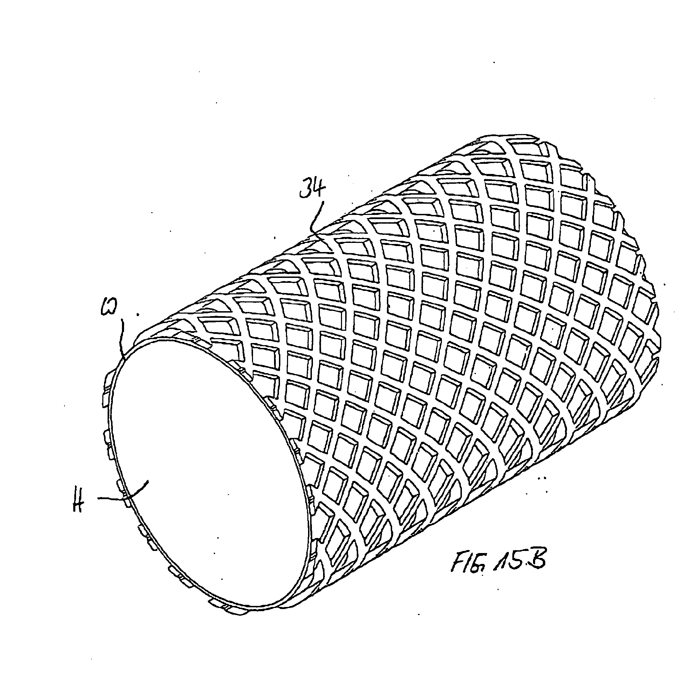

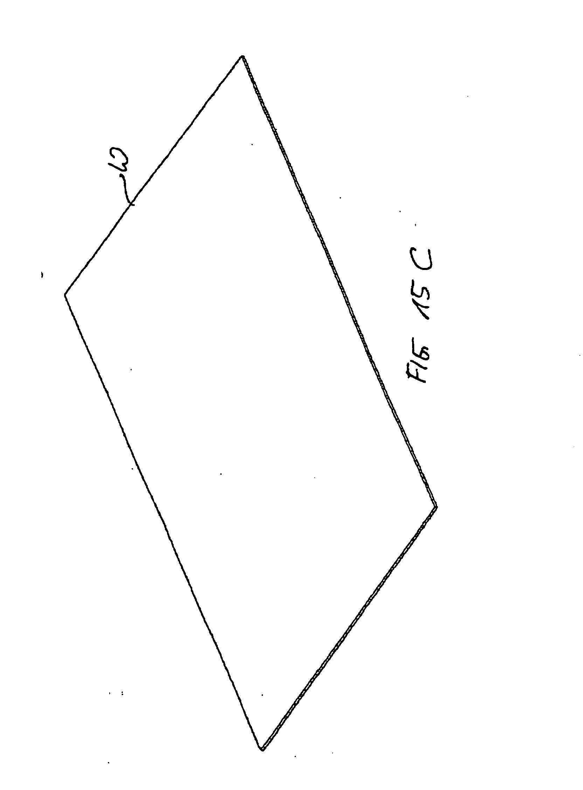

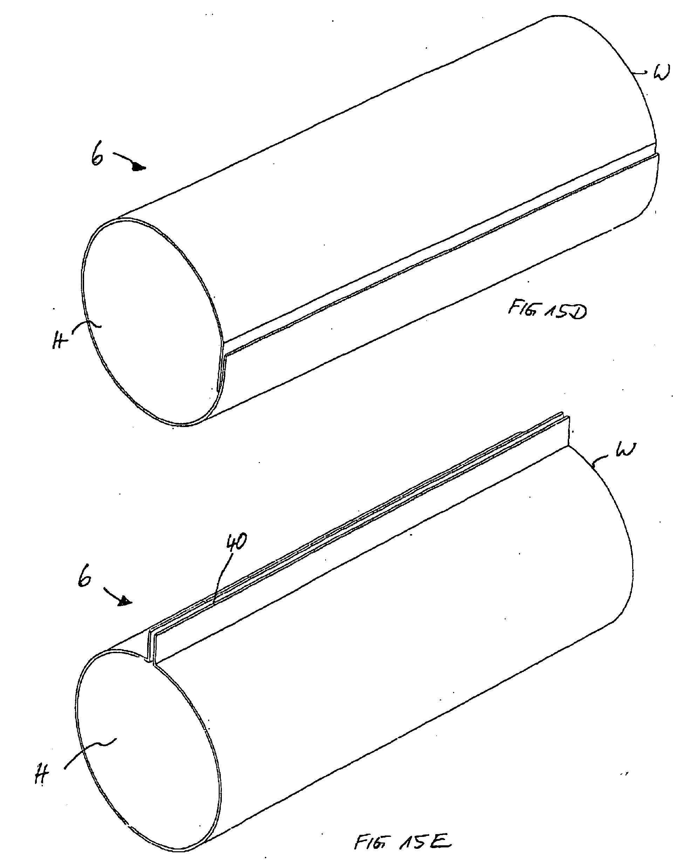

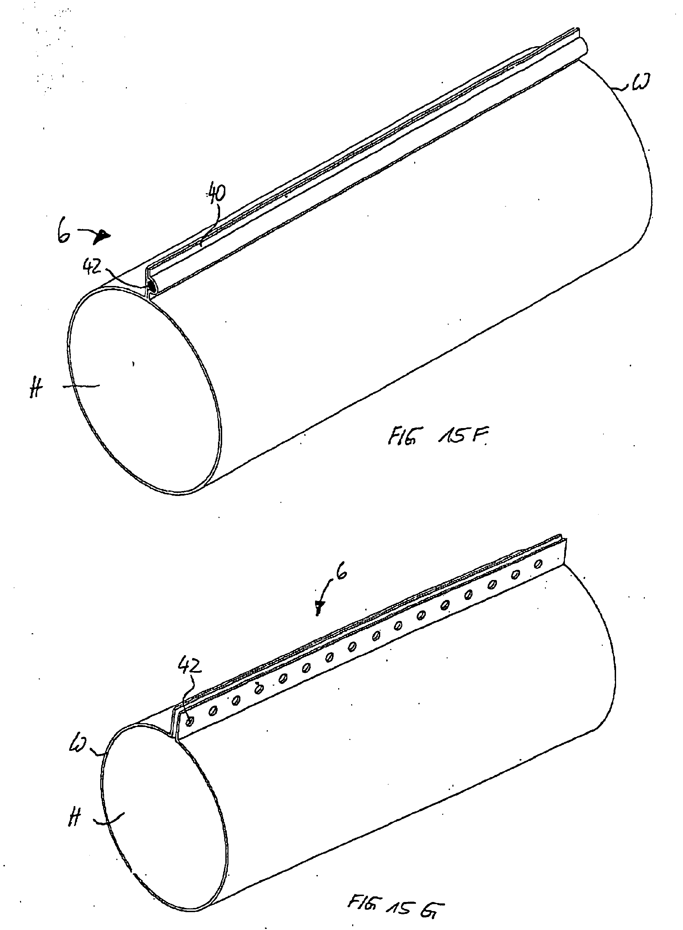

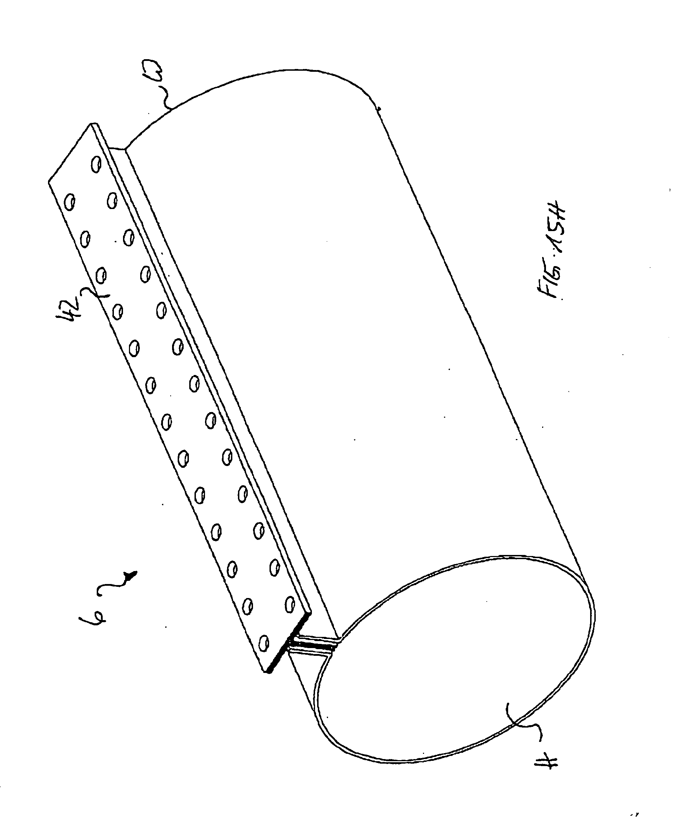

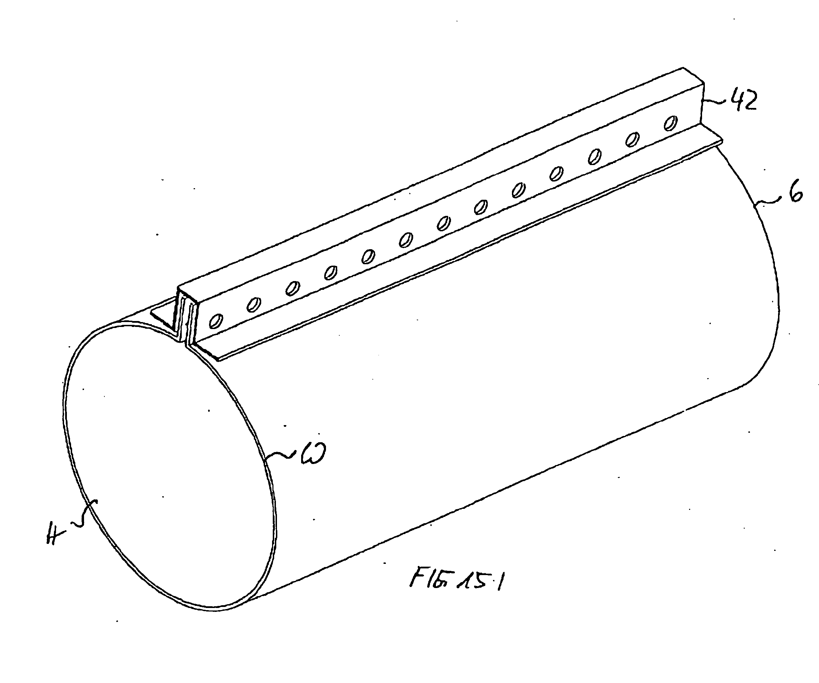

Die Figuren 15A bis 15I zeigen verschiedene Ausführungsformen für einen schlauchartigen Strömungskanal 6. Dabei ist der Strömungskanal 6 durch ein als Vollschlauch geformtes Material der Kanalwand w gebildet (Figur 15A). In der Figur 15B ist das Material der Kanalwand w mit einem Verstärkungsgewebe 34 zur Aussteifung des Strömungskanals 6 versehen. Die Figuren 15C bis 15E zeigt die Herstellung des schlauchförmigen Strömungskanals 6 durch Extrudieren oder Formung einer glatten Folie zu einem Schlauch, wobei der Schlauch nach Figur 15E derart geformt ist, dass eine Längsnase 40 zur Fixierung gebildet ist. Alternativ kann die Folie als Schrumpffolie ausgeführt sein, die dann aufgeblasen wird und den Strömungskanal 6 bildet.

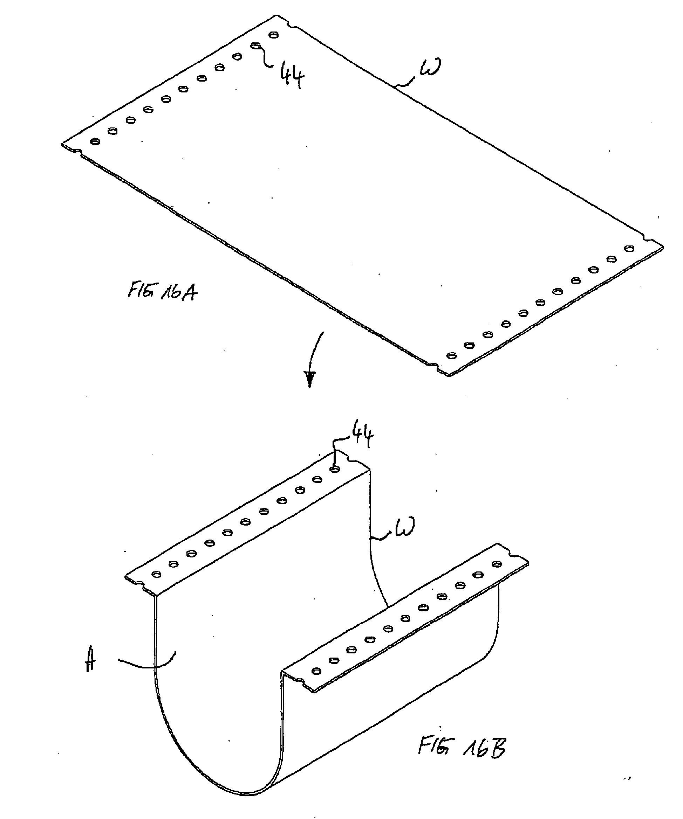

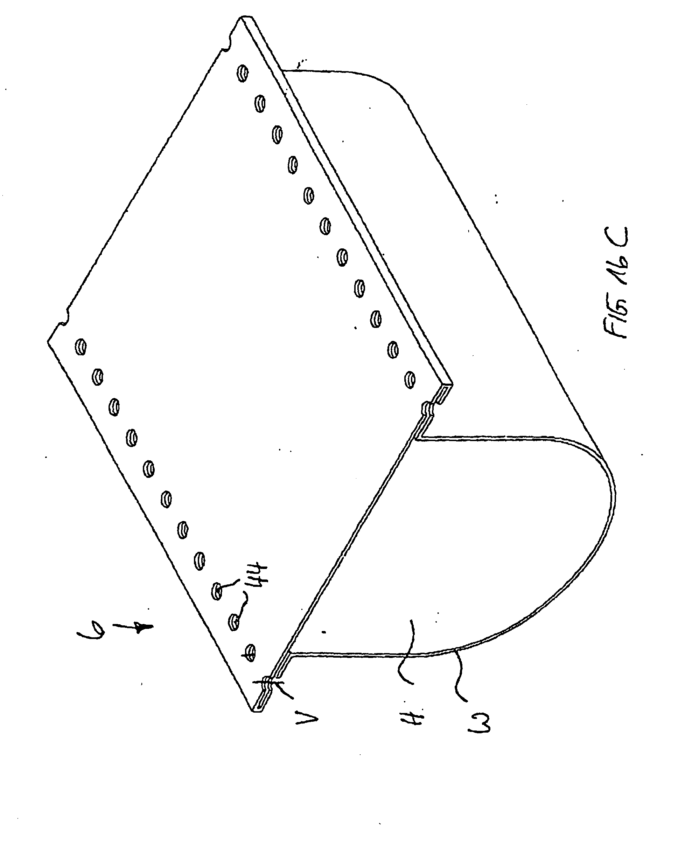

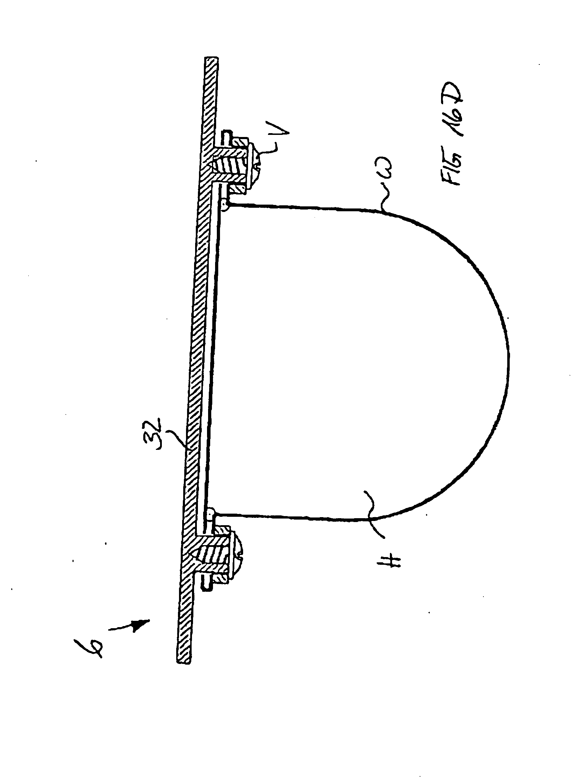

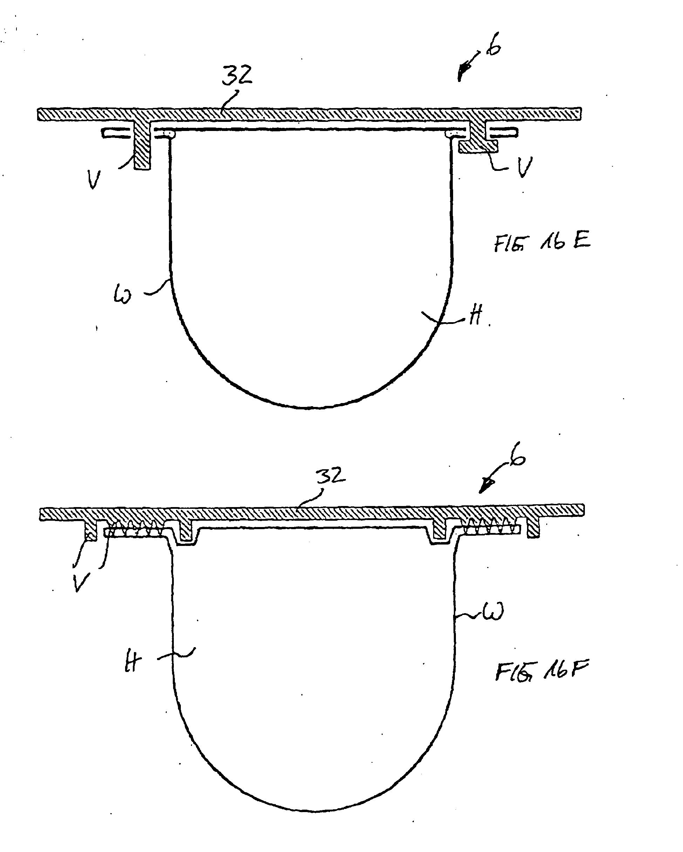

Der schlauchförmige Strömungskanal 6 kann z.B. mit einem oder mehreren Drähten oder Profilen 42 versehen sein (Figuren 15F bis 15I). Je nach Art und Ausführung der Profile 42 können diese zur Bildung und/oder Verbindung von Folienlängskanten, zur Fixierung auf der formstabilen Fläche 32, z.B. einer Instrumententafel, einer Mittelkonsole oder einer Verkleidungsfläche einer Tür, eines Daches oder einer Seitenwand vorgesehen sein. Die Figuren 16A bis 16E zeigen verschiedene Fixierungsformen für einen schlauchartigen Strömungskanal 6, wobei die Folie oder das Gewebe ein entsprechendes Lochmuster 44 nach Figur 16A zur Bildung sowie Fixierung des Strömungskanals 6 nach Figur 16B aufweist. Zusätzlich kann der Strömungskanal 6 verschweißt oder verklebt werden. Figur 16D zeigt eine lösbare Verbindung V, z.B. eine Schraubverbindung. Figur 16F zeigt eine Schweißverbindung und Figur 16E eine Niet- oder Stanzverbindung vor und nach dem Niet- oder Stanzvorgang.

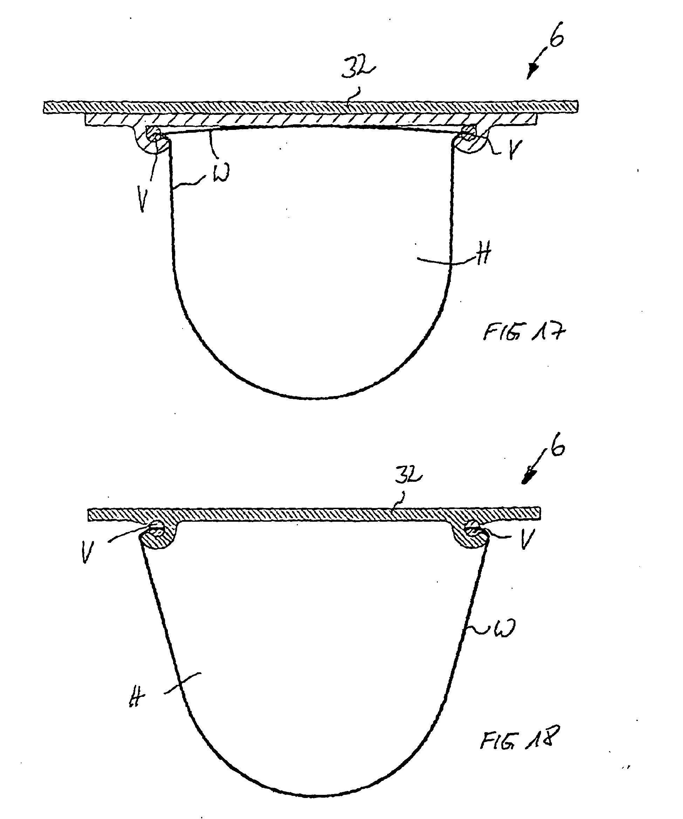

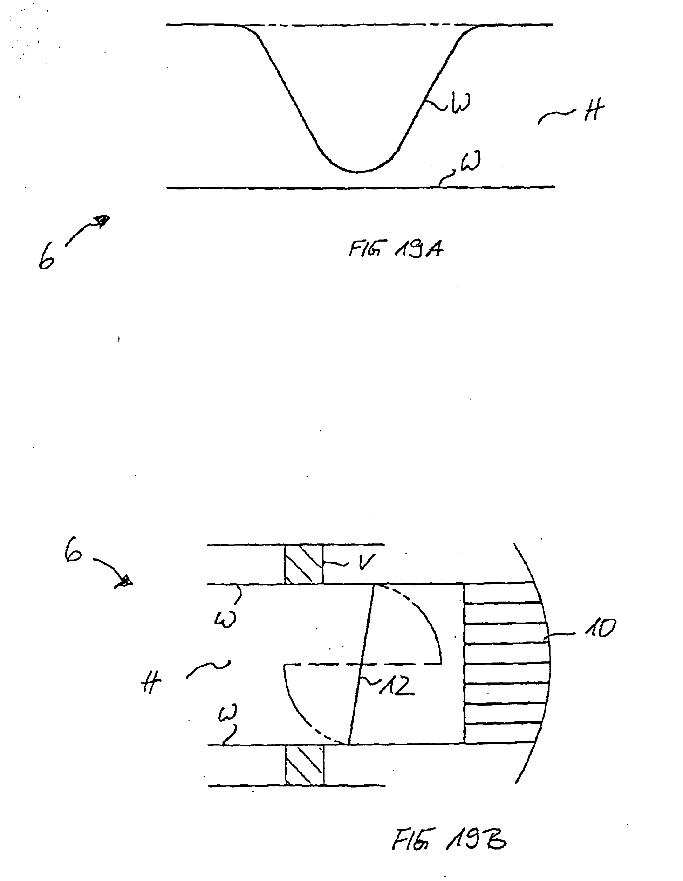

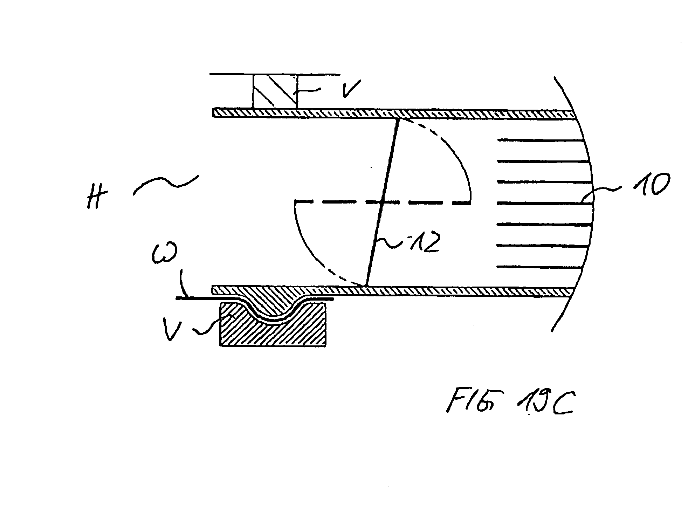

Je nach Art und Ausbildung kann der Strömungskanal 6 als Vollschlauch (Figur 17) oder als Halbschlauch (Figur 18) ausgebildet sein. In beiden Figuren 17 und 18 ist dabei der jeweilige Strömungskanal 6 in Nuten der Fläche 32 gefügt, z.B. geclipt oder geklemmt. Zur Bildung einer besonders einfachen Drossel- und/oder Absperrfunktion ist der Strömungskanal 6 beispielsweise bereichsweise abgedrückt (Figur 19A) oder mit einem Stellelement 12 (Figur 19B) versehen.

### Bezugszeichenliste

- 1 .: Vorrichtung zur Luftverteilung
- 2: Innenraum eines Fahrzeugs
- 4: Belüftungselement
- 5: Klimaanlage und/oder Heizanlage
- 5a, 5b: Wärmetauscher
- 6: Strömungskanal
- 8: Austrittsöffnung
- 10: Auslässe
- 12: Stellelemente
- 14: Mischelemente
- 15: Absperrklappe
- 16: Mehrkammerkanal
- 18: Vierkammerkanal
- 20: Kammerkanal
- 22: Leitelemente
- 24: Zweikammerkanal
- 26: Mischkammerkanal
- 28: Trennwand
- 30: Einkammerkanal
- 32: formfeste Fläche (= Wand)
- 34: Verstärkungsgewebe
- 36: Erhöhung
- 38: Vertiefung
- 40: Längsnase
- 42: Profil

- H: Hohlraum
- K: Kaltluftstrom
- L: Gesamtluftstrom
- T: Teilluftstrom
- W: Warmluftstrom

## Patentansprüche

1. Strömungskanal (6) zur Verwendung in einer Vorrichtung (1) zur Luftverteilung in einem Fahrzeug, der eine Kanalwand (w, w1 bis w24) aus einem zumindest teilweise verformbaren Material aufweist, welches an eine formfesten Fläche (32) unter Bildung eines schlauchartigen Hohlraumes (H) zwischen der formstabilen Fläche und der Kanalwand befestigt ist, **dadurch gekennzeichnet, dass** der Strömungskanal (6) mit mindestens einem Stellelement (12) versehen und mittels dieses Stellelements (12) durch Einschnüren der Kanalwand verschließbar ist.

2. Strömungskanal nach einem der vorhergehenden Ansprüche, **dadurch gekennzeichnet, dass** das verformbare Material folienartig ausgebildet ist.

3. Strömungskanal nach einem der vorhergehenden Ansprüche, **dadurch gekennzeichnet, dass** das verformbare Material gewebeartig ausgebildet ist.

4. Strömungskanal nach einem der vorhergehenden Ansprüche, **dadurch gekennzeichnet, dass** die Kanalwand (w) clipartig befestigt ist.

5. Strömungskanal nach einem der vorhergehenden Ansprüche, **dadurch gekennzeichnet, dass** das verformbare Material mit einem Profil (42) versehen ist.

6. Strömungskanal nach einem der vorhergehenden Ansprüche, **dadurch gekennzeichnet, dass** die Kanalwand (w, w1 bis w24) aus mehreren geschichteten Folien gebildet ist, die unter Bildung des Hohlraums (H) an der formfesten Fläche (32) angeordnet sind.

7. Strömungskanal nach Anspruch 6, **dadurch gekennzeichnet, dass** die geschichteten Folien zusätzlich von einem festen Material umgeben sind.

8. Vorrichtung (1) zur Luftverteilung im Innenraum (2) eines Fahrzeugs mit einem Belüftungselement (4) zur Erzeugung eines Luftstroms (L) mit mehreren in den Innenraum (2) führenden Auslässen (10), **dadurch gekennzeichnet, dass** die Vorrichtung mindestens einen an dem Belüftungselement (4) angeschlossenen Strömungskanal (6) nach einem der vorhergehenden Ansprüche aufweist.

9. Vorrichtung (1) zur Luftverteilung im Innenraum (2) eines Fahrzeugs nach Anspruch 8, **dadurch gekennzeichnet, dass** der Strömungskanal (6) als ein gemeinsamer Mehrkammerkanal (16) für mehrere Auslässe (10) ausgebildet ist und mehrere Austrittsöffnungen (8) aufweist, die unmittelbar in die Auslässe (10) münden.

10. Vorrichtung nach Anspruch 9, **dadurch gekennzeichnet, dass** der Mehrkammerkanal (16) als ein Zweikammerkanal (24) ausgebildet ist.

11. Vorrichtung nach einem der Ansprüche 9 oder 10, **dadurch gekennzeichnet, dass** der Mehrkammerkanal (16) in mehrere Kammerkanäle (20) unterteilt ist.

12. Vorrichtung nach Anspruch 11, **dadurch gekennzeichnet, dass** ein einzelner Kammerkanal (20) als Zweikammerkanal (24) oder ein einzelner Mischkammerkanal (26) ausgebildet ist.

13. Vorrichtung nach Anspruch 11 oder 12, **dadurch gekennzeichnet, dass** jeder Kammerkanal (20) in einen zugehörigen Auslass (10) mündet.

14. Vorrichtung nach einem der Ansprüche 11 bis 13, **dadurch gekennzeichnet, dass** ein Kammerkanal (20) als Kaltstromkanal (K) und ein anderer als Warmstromkanal (W) ausgebildet ist.

15. Vorrichtung nach einem der Ansprüche 11 bis 14, **dadurch gekennzeichnet, dass** die jeweilige Austrittsöffnung (8) mindestens ein Stellelement (12) oder ein Mischelement (14) umfasst.

16. Vorrichtung nach einem der Ansprüche 11 bis 15, **dadurch gekennzeichnet, dass** an mindestens einem Auslass (10) ein Messsensor zur Erfassung von betriebsrelevanten Daten vorgesehen ist.

17. Vorrichtung nach einem der Ansprüche 11 bis 16, **dadurch gekennzeichnet, dass** der Mehrkammerkanal (16) entlang einer Fahrzeughaut längsseitig und/oder querseitig verlaufend angeordnet ist.

18. Vorrichtung nach einem der Ansprüche 11 bis 17, **dadurch gekennzeichnet, dass** der Mehrkammerkanal (16) als Ringleitung ausgebildet ist.

## Claims

1. Flow duct (6) for use in a device (1) for air distribution in a vehicle, which comprises a duct wall (w, w1 to w24) made of an at least partially deformable material, which is attached to a dimensionally stable surface (23) to form a hose-like hollow shape (H) between the said dimensionally stable surface (23) and the duct wall, **characterised in that** the flow duct (6) is provided with at least one regulating element (12) and can be closed by means of this regulating element (12) by constricting the duct wall.

2. Flow duct according to any of the preceding claims, **characterised in that** the deformable material is a foil-like material.

3. Flow duct according to any of the preceding claims, **characterised in that** the deformable material is a fabric-like material.

4. Flow duct according to any of the preceding claims, **characterised in that** the duct wall (w) is fixed by clipping means.

5. Flow duct according to any of the preceding claims, **characterised in that** the deformable material is provided with a profile (42).

6. Flow duct according to any of the preceding claims, **characterised in that** the duct wall (w, w1 to w24) is formed from a plurality of layered foils which are arranged on the dimensionally stable surface (23) to form the hollow space (H).

7. Flow duct according to Claim 6, **characterised in that** the layered foils are additionally surrounded by a solid material.

8. Device (1) for air distribution in the interior (2) of a vehicle having a ventilating element (4) for generating an air flow (L) with a plurality of air discharge element (10) that lead into the said interior (2), **characterised in that** the device comprises at least one flow duct (6) according to any of the preceding claims connected to the said ventilating element (4).

9. Device (1) for air distribution in the interior (2) of a vehicle according to Claim 8, **characterised in that** the flow duct (6) is made as a common multi-chamber duct (16) for a plurality of air discharge elements (10) and has a plurality of outlet openings (8) which open directly into the air discharge elements (10).

10. Device according to Claim 9, **characterised in that** the multi-chamber duct (16) is a two-chamber duct (24).

11. Device according to either of Claims 9 or 10, **characterised in that** the multi-chamber duct (16) is subdivided into a plurality of chamber ducts (20).

12. Device according to Claim 11, **characterised in that** an individual chamber duct (20) is made as a two-chamber duct (24) or an individual mixing chamber duct (26).

13. Device according to Claims 11 or 12, **characterised in that** each chamber duct (20) opens into an associated air discharge element (10).

14. Device according to any of Claims 11 to 13, **characterised in that** one chamber duct (20) is made as a cold flow duct (K) and another is made as a warm flow duct (W).

15. Device according to any of Claims 11 to 14, **characterised in that** each of the outlet openings (8) has at least one regulating element (12) or a mixing element (14).

16. Device according to any of Claims 11 to 15, **characterised in that** a measuring sensor for registering relevant operating data is provided on at least one air discharge element (10).

17. Device according to any of Claims 11 to 16, **characterised in that** the multi-chamber duct (16) is arranged longitudinally and/or transversely along a vehicle shell.

18. Device according to any of Claims 11 to 17, **characterised in that** the multi-chamber duct (16) is made as a ring main.

## Revendications

1. Conduit d'écoulement (6) utilisé dans un dispositif (1) prévu pour la répartition d'air dans un véhicule, conduit d'écoulement qui présente une paroi de conduit (w, w1 à w24) réalisée dans un matériau au moins partiellement déformable qui est fixé sur une surface indéformable (32), en formant un espace creux (H) de forme tubulaire, entre la surface indéformable et la paroi du conduit, **caractérisé en ce que** le conduit d'écoulement (6) est doté d'au moins un élément de réglage (12) et peut être obturé par rétrécissement de la paroi du conduit, au moyen de cet élément de réglage (12).

2. Conduit d'écoulement selon la revendication précédente, **caractérisé en ce que** le matériau déformable est réalisé à la façon d'une feuille.

3. Conduit d'écoulement selon l'une ou l'autre des revendications précédentes, **caractérisé en ce que** le matériau déformable est réalisé à la façon d'un tissu.

4. Conduit d'écoulement selon l'une quelconque des revendications précédentes, **caractérisé en ce que** la paroi (w) du conduit est fixée de manière clipsée.

5. Conduit d'écoulement selon l'une quelconque des revendications précédentes, **caractérisé en ce que** le matériau déformable est doté d'un profil (42).

6. Conduit d'écoulement selon l'une quelconque des revendications précédentes, **caractérisé en ce que** la paroi (w, w1 à w24) du conduit est formée par plusieurs feuilles empilées qui sont disposées sur la surface indéformable (32), en formant l'espace creux (H).

7. Conduit d'écoulement selon la revendication 6, **caractérisé en ce que** les feuilles empilées sont entourées en outre d'un matériau solide.

8. Dispositif (1) prévu pour la répartition d'air dans l'habitacle (2) d'un véhicule, comprenant un élément de ventilation (4) servant à produire un flux d'air (L) avec plusieurs diffuseurs (10) débouchant dans l'habitacle (2),
**caractérisé en ce que** le dispositif présente, selon l'une quelconque des revendications précédentes, au moins un conduit d'écoulement (6) raccordé à l'élément de ventilation (4).

9. Dispositif (1) prévu pour la répartition d'air dans l'habitacle (2) d'un véhicule selon la revendication 8, **caractérisé en ce que** le conduit d'écoulement (6) est configuré comme un conduit à chambres multiples (16) commun à plusieurs diffuseurs (10) et présente plusieurs ouvertures de sortie (8) qui débouchent directement dans les diffuseurs (10).

10. Dispositif selon la revendication 9, **caractérisé en ce que** le conduit à chambres multiples (16) est configuré comme un conduit à deux chambres (24).

11. Dispositif selon la revendication 9 ou 10, **caractérisé en ce que** le conduit à chambres multiples (16) est subdivisé en plusieurs conduits à chambres (20).

12. Dispositif selon la revendication 11, **caractérisé en ce qu'**un seul conduit à chambre (20) est configuré comme un conduit à deux chambres (24) ou bien comme un seul conduit à chambre de mélange (26).

13. Dispositif selon la revendication 11 ou 12, **caractérisé en ce que** chaque conduit à chambre (20) débouche dans un diffuseur correspondant (10).

14. Dispositif selon l'une quelconque des revendications 11 à 13, **caractérisé en ce qu'**un conduit à chambre (20) est configuré comme un conduit de flux d'air froid (K) et un autre conduit à chambre comme un conduit de flux d'air chaud (W).

15. Dispositif selon l'une quelconque des revendications 11 à 14, **caractérisé en ce que** l'ouverture de sortie respective (8) comprend au moins un élément de réglage (12) ou un élément mélangeur (14).

16. Dispositif selon l'une quelconque des revendications 11 à 15, **caractérisé en ce qu'**il est prévu, sur au moins un diffuseur (10), un capteur de mesure servant à saisir des données importantes pour le fonctionnement.

17. Dispositif selon l'une quelconque des revendications 11. à 16, **caractérisé en ce que** le conduit à chambres multiples (16) est disposé en suivant l'habitacle d'un véhicule, de façon longitudinale et / ou transversale.

18. Dispositif selon l'une quelconque des revendications 11 à 17, **caractérisé en ce que** le conduit à chambres multiples (16) est configuré comme une conduite annulaire.
